# EUROPÄISCHE PATENTSCHRIFT

(11) **EP 3 985 965 B1**
(45) Veröffentlichungstag und Bekanntmachung des Hinweises auf die Patenterteilung: **29.11.2023**
(21) Anmeldenummer: 21202499.6
(22) Anmeldetag: 13.10.2021
(51) Int. Cl.: H04N 25/40, H04N 25/616, H04N 25/78

(54) **BILDWANDLER**
IMAGE CONVERTER
CONVERTISSEUR D'IMAGE

(30) Priorität: 15.10.2020 DE 102020127129
(43) Veröffentlichungstag der Anmeldung: 20.04.2022
(73) Patentinhaber: Arnold & Richter Cine Technik GmbH & Co. Betriebs KG, 80807 München (DE)
(72) Erfinder: DEDEK, Nicolas, 80637 München (DE)
(74) Vertreter: Manitz Finsterwald Patent- und Rechtsanwaltspartnerschaft mbB

(56) Entgegenhaltungen:
- US-A1- 2011 205 100
- US-A1- 2014 313 385
- US-A1- 2016 198 114

## Beschreibung

Die Erfindung betrifft einen Bildwandler mit einem Bildsensor, insbesondere CMOS-Bildsensor, für elektronische Kameras, welcher eine Vielzahl von in Zeilen und Spalten angeordneten Pixeln aufweist, wobei mehreren Pixeln in einer Spalte wenigstens eine gemeinsame Spaltenleitung zugeordnet ist und wobei jedes Pixel ein lichtempfindliches Detektorelement, welches dazu ausgebildet ist, aus während einer Belichtung auftreffendem Licht elektrische Ladung zu erzeugen, und eine Rücksetzeinrichtung umfasst, welche dazu ausgebildet ist, in dem Pixel vorhandene Ladung auf einen Referenzwert zurückzusetzen.

Elektronische Kameras werden beispielsweise als Bewegtbildkameras verwendet, um Bewegtbildsequenzen aufzunehmen, die später im Kino vorgeführt werden. Dabei ist es wichtig, dass diese Kameras eine hohe Bildqualität aufweisen. Insbesondere werden bei der Nachbearbeitung die aufgenommenen Bilder noch in Helligkeit, Kontrast und Farbe verändert, und das Endprodukt - die bearbeitete Bewegtbildsequenz bzw. der Film - wird im Kino auf eine große Leinwand projiziert.

Elektronische Kameras verwenden typischerweise Bildsensoren aus Silizium in CMOS- oder CCD-Technologie. Bei derartigen Bildsensoren bilden die Pixel ein Bildfeld, und sie sind in Zeilen und Spalten angeordnet. Die Pixel können mit einem Farbfiltermuster (Color Filter Array, CFA) versehen sein, um eine unterschiedliche spektrale Empfindlichkeit zu besitzen. Jedes Pixel umfasst dabei zumindest ein lichtempfindliches Detektorelement, um aus während einer Belichtung einfallendem Licht elektrische Ladung zu erzeugen. Die erzeugte Ladung kann über einen Ausleseknoten des Pixels ausgelesen und daraufhin digitalisiert werden, um einen zu der erzeugten Ladung proportionalen digitalen Wert bestimmen und auszugeben zu können, wobei die jeweiligen digitalen Werte der Vielzahl von Pixeln eine digitale Repräsentation des aufgenommenen Bildes bilden. Beispielsweise können die Pixel dazu einen Wandler-Transistor aufweisen, der einen Impedanzwandler bilden und in Abhängigkeit von einer an seinem Eingang vorhandenen Ladungsmenge ein Spannungssignal an seinem Signalausgang erzeugen kann.

Die Spaltenleitungen des Bildsensors können ferner mit einem jeweiligen Spaltenverstärker verbunden sein, um die nacheinander auf die zugeordnete Spaltenleitung geschalteten Spannungssignale der Pixel zu verstärken. Beispielsweise können die Pixel des Bildsensors zeilenweise adressiert werden und die Signale der Pixel können zu den Spaltenverstärkern am Rand des Bildfelds und von dort zum Ausgang geleitet, digitalisiert und optional mit Kalibrierdaten verrechnet werden.

Ein solches zeilenweises Auslesen der Pixel des Bildsensors ermöglicht ein schnelles und effizientes Digitalisieren der während einer Belichtung aufgenommenen Signale. Um dieses Digitalisieren der Signale bzw. Auslesen des Bildsensors noch weiter zu beschleunigen, offenbart DE 10 2011 120 099 A1 einen Bildsensor, bei dem jeder Spalte von Pixeln mehrere Spaltenleitungen zugeordnet sind, wobei eine jeweilige Umschalteinrichtung in einem ersten Schaltzustand eine der Spaltenleitungen mit einer Vorladeschaltung und eine andere der Spaltenleitungen mit einer Spaltenausleseschaltung koppelt. Die Vorladeschaltung kann dabei dazu vorgesehen sein, die gekoppelte Spaltenleitung auf ein Referenzpotenzial zurückzusetzen, sodass die Zeit während des Auslesens eines Pixels über die eine Spaltenleitung dazu genutzt werden kann, die andere Spaltenleitung für das Auslesen eines nachfolgenden Pixels vorzubereiten.

Das jeweilige Pixel kann ferner eine Rücksetzeinrichtung umfassen, um wahlweise den Ausleseknoten mit einem Rücksetz-Potential zu koppeln und dadurch in dem Pixel vorhandene Ladung auf einen Referenzwert zurückzusetzen. Dabei ist beispielsweise aus DE 10 2010 035 811 A1 ein Bildsensor bekannt, bei dem nach dem Prinzip des Correlated Double Sampling eine Differenz zwischen einem Bildspannungssignal, welches proportional zu der an dem Detektorelement erzeugten elektrischen Ladung ist, und einem Referenzspannungssignal gebildet wird, welches proportional zu dem Referenzwert ist. Dies ermöglicht es insbesondere, einen aufgrund eines Rauschens des Pixels entstehenden Offset auszugleichen und dadurch die Genauigkeit der ausgegebenen digitalen Werte zu erhöhen.

Ferner sind Bildwandler beispielsweise in US 2011/205100 A1, in US 2014/313385 A1 und in US 2016/198114 A1 beschrieben.

Das Correlated Double Sampling kann beispielsweise als ein analoges Correlated Double Sampling erfolgen, wobei das analoge Referenzspannungssignal von dem analogen Bildspannungssignal abgezogen wird, um das Rauschen des Bildsensors auszugleichen. Dazu kann beispielsweise das Referenzspannungssignal an einen negativen Eingang eines Spaltenverstärkers und das Bildspannungssignal an einen positiven Eingang des Spaltenverstärkers angelegt werden, so dass an dem Ausgang des Spaltenverstärkers eine der Differenz der beiden Spannungssignale entsprechende Spannung anliegt. Das derart bereits korrigierte Spannungssignal kann daraufhin mittels eines Analog-Digital-Wandlers in einen digitalen Wert gewandelt werden.

Alternativ zu einem solchen analogen Correlated Double Sampling können das Referenzspannungssignal und das Bildspannungssignal auch zunächst in jeweilige digitale Signale gewandelt werden, um ein Rauschen des jeweiligen Pixels durch darauffolgendes Verrechnen der digitalen Signale im Zuge eines digitalen Correlated Double Sampling ausgleichen zu können. Dabei kann insbesondere das Referenzspannungssignal, welches beim analogen Correlated Double Sampling zeitweise in einem Speicher gehalten werden muss, unmittelbar gewandelt werden, so dass die zum Auslesen des Bildspannungssignals benötigte Zeit bereits zum Wandeln des Referenzspannungssignals genutzt werden kann.

Während mittels des Correlated Double Sampling durch Rauschen des Bildsensors bzw. durch unterschiedliche Referenzwerte einzelner Pixel bedingte Fehler oder Offsets ausgeglichen werden können, ergibt sich die Problematik, dass auch während des Digitalisierens der Signale Fehler bzw. Schwankungen entstehen können. Solche Fehler sind bei einem analogen Correlated Double Sampling nachträglich allenfalls näherungsweise zu korrigieren, da lediglich ein fehlerbehafteter digitalisierter Wert ausgegeben wird, der keinen Aufschluss über die Größe des Fehlers ermöglicht. Beim digitalen Correlated Double Sampling werden zwei digitalisierte und fehlerbehaftete Werte voneinander abgezogen, wobei sich diese Fehler unterscheiden können und ebenfalls nicht exakt zu bestimmen sind, so dass auch der Fehler des ausgegebenen Wertes nur schwer abgeschätzt bzw. korrigiert werden kann. Bei einem zeilenweisen Auslesen des Bildsensors können sich solche Fehler zudem auf die gesamte Zeile auswirken und eine strukturelle Abweichung in dem aufgenommen Bild entlang dieser Zeile erzeugen, auf welche das menschliche Auge besonders sensitiv reagiert.

Es ist daher eine Aufgabe der Erfindung, einen Bildwandler zum effizienten Wandeln von analogen Signalen eines Bildsensors in digitale Ausgangssignale zu schaffen, mittels dessen möglichst präzise der während einer Bildaufnahme erzeugten Ladung entsprechende digitale Ausgangssignale ermittelt und insbesondere während der Digitalisierung entstehende Fehler ausgeglichen werden können.

Diese Aufgabe wird gelöst durch einen Bildwandler mit den Merkmalen des Anspruchs 1 sowie durch einen Bildwandler mit den Merkmalen des Anspruchs 2.

Der Bildwandler weist eine Steuereinrichtung auf, welche dazu ausgebildet ist, ein jeweiliges Pixel mit der zugeordneten Spaltenleitung zu koppeln, um an der Spaltenleitung nacheinander ein dem Referenzwert entsprechendes Referenzspannungssignal und ein der erzeugten elektrischen Ladung entsprechendes Bildspannungssignal auszugeben. Der Bildwandler weist dabei wenigstens eine Wandlereinheit auf, die einen ersten Analog-Digital-Wandler und einen zweiten Analog-Digital-Wandler aufweist, wobei die Steuereinrichtung dazu ausgebildet ist, das Referenzspannungssignal des jeweiligen Pixels zum Wandeln in einen digitalen Referenzsignalwert an einen Signaleingang des ersten Analog-Digital-Wandlers und gleichzeitig das Bildspannungssignal des jeweiligen Pixels zum Wandeln in einen digitalen Bildsignalwert an einen Signaleingang des zweiten Analog-Digital-Wandlers anzulegen.

Um ein Pixel auszulesen bzw. einen digitalen Wert zu ermitteln, welcher der während einer Belichtung an dem lichtempfindlichen Detektorelement erzeugten Ladung proportional ist, kann also zunächst die in dem Pixel vorhandene Ladung auf einen Referenzwert zurückgesetzt werden. Dieser Referenzwert kann dann durch Koppeln des Pixels mit der Spaltenleitung als ein entsprechendes Referenzspannungssignal ausgegeben werden. Daraufhin kann die während der Belichtung an dem Detektorelement erzeugte Ladung mittels der Spaltenleitung als ein Bildspannungssignal ausgegeben werden. Das Referenzspannungssignal und das Bildspannungssignal bilden dabei jeweilige analoge Signale, die beispielsweise in jeweiligen Speichern, insbesondere Kondensatoren, zwischengespeichert werden können, um gleichzeitig an die Signaleingänge der Analog-Digital-Wandler angelegt werden zu können. Insbesondere kann das Referenzspannungssignal in einem Speicher gehalten werden, während noch die Belichtung erfolgt (Ladungserzeugung im Detektorelement) und/oder während das Bildspannungssignal erzeugt bzw. über die Spaltenleitung ausgegeben wird. Das Bildspannungssignal ebenfalls in einem Speicher gehalten oder insbesondere auch direkt an den Signaleingang des zweiten Analog-Digital-Wandlers angelegt werden.

Indem die Steuereinrichtung dazu ausgebildet ist, das Referenzspannungssignal und das Bildspannungssignal des jeweiligen Pixels gleichzeitig (d.h. simultan) an die jeweiligen Signaleingänge des ersten Analog-Digital-Wandlers und des zweiten Analog-Digital-Wandlers anzulegen, kann insbesondere auch das Wandeln dieser beiden dem Pixel zugeordneten analogen Signale gleichzeitig erfolgen, um den Referenzsignalwert und den Bildsignalwert in einem gemeinsamen Digitalisierungsprozess zu bestimmen. Dabei können der erste und der zweite Analog-Digital-Wandler synchronisiert betrieben werden, so dass der digitale Referenzsignalwert und der digitale Bildsignalwert mit gleichen, insbesondere auf dem Digitalisieren der analogen Signale beruhenden, Fehlern behaftet sein können. Durch ein nachfolgend durchgeführtes digitales Correlated Double Sampling, bei welchem der Referenzsignalwert von dem Bildsignalwert subtrahiert wird, können diese Fehler somit gerade eliminiert werden, so dass bei dem letztlich ausgegebenen digitalen Wert sowohl ein Rauschen des Pixels als auch durch das Digitalisieren der Spannungssignale entstehende Fehler ausgeglichen sind. Insbesondere Fehler, die zu einem Offset der digitalen Werte führen, können durch das Subtrahieren des Referenzsignalwerts von dem Bildsignalwert exakt ausgeglichen werden.

Das gleichzeitige Anlegen der analogen Signale eines jeweiligen Pixels, also des Referenzspannungssignals und des Bildspannungssignals, an einen jeweiligen Analog-Digital-Wandler ermöglicht somit einen Ausgleich von während des Digitalisierens auftretenden Fehlern, um bei einem herkömmlichen Correlated Double Sampling erforderliche Näherungsmethoden zu ersetzen und die Genauigkeit des ausgegebenen digitalen Wertes zu erhöhen. Beispielsweise kann bei einem analogen Correlated Double Sampling, bei dem bereits das analoge Referenzspannungssignal von dem analogen Bildspannungssignal abgezogen wird und lediglich ein zu wandelndes analoges Signal zur Verfügung steht, der beim Digitalisieren entstehende Fehler durch Auslesen dunkler bzw. unbelichteter Zeilen näherungsweise bestimmt werden. Dabei wird für diese dunklen Zeilen ein Mittelwert der während des Digitalisierens auftretenden Fehler ermittelt und von dem digitalisierten Signal des Pixels abgezogen, um den Fehler dieses digitalen Wertes auszugleichen. Jedoch erfordert ein möglichst exaktes Bestimmen des Fehlers eine große Anzahl dunkler Zeilen, wobei sich die verbleibende statistische Unsicherheit des bestimmten Mittelwerts stets in einem weiteren, nicht zu kompensierenden Fehler niederschlägt. Zudem können Schwankungen des Fehlers zwischen verschiedenen gleichzeitig digitalisierten Signalen dabei nicht berücksichtigt werden.

Bei einem herkömmlichen digitalen Correlated Double Sampling stehen zwar grundsätzlich zwei voneinander abzuziehende digitale Werte zur Verfügung, jedoch können die nacheinander mittels eines einzigen Analog-Digital-Wandlers bestimmten Referenzsignalwerte und Bildsignalwerte unterschiedlich fehlerbehaftet sein, da sich die entstehenden Fehler für jeden Digitalisierungsprozess unterscheiden können. Beispielsweise kann das Generieren einer Spannungsrampe oder das Starten von Taktzählern zu verschiedenen Offsets der in verschiedenen, insbesondere aufeinanderfolgenden, Digitalisierungsprozessen digitalisierten Signale führen. Auch Schwankungen der Versorgungsspannung des Bildwandlers und insbesondere der Analog-Digital-Wandler können sich auswirken. Durch das gleichzeitige Anlegen des Referenzspannungssignals und des Bildspannungssignals an den ersten und den zweiten Analog-Digital-Wandler ist es hingegen beispielsweise möglich, für beide Analog-Digital-Wandler eine gemeinsame Spannungsrampe zu generieren und/oder Taktzähler zu synchronisieren, so dass sich ein Offset der Spannungsrampe bzw. der Taktzähler in gleicher Weise auf den Referenzsignalwert und den Bildsignalwert auswirkt und durch eine Subtraktion ausgeglichen werden kann.

Sofern zwei Ereignisse gleichzeitig stattfinden, bedeutet dies im Zusammenhang mit der Erfindung, dass die Ereignisse zeitlich überlappen und insbesondere einen übereinstimmenden Anfangszeitpunkt und/oder einen übereinstimmenden Endzeitpunkt besitzen können.

Wie erläutert, können die Pixel einer Spalte einer jeweiligen Spaltenleitung zugeordnet sein. Die Spaltenleitung kann dabei einen Spaltenbus bilden, um die analogen Signale eines jeweiligen gekoppelten Pixels an die Analog-Digital-Wandler anzulegen. Das Koppeln des Pixels und insbesondere des Detektorelements mit der zugeordneten Spaltenleitung sowie das Leiten der Signale an die Analog-Digital-Wandler können grundsätzlich auch indirekt erfolgen. Beispielsweise können die analogen Signale des Pixels über einen Wandler-Transistor, insbesondere zur Impedanzwandlung, und über einen Auswahl-Schalter auf die Spaltenleitung geleitet werden. Das Anlegen des Bildspannungssignals und/oder des Referenzspannungssignals an die jeweiligen Signaleingänge der Analog-Digital-Wandler kann ferner insbesondere über zwischengeschaltete Speicher, beispielsweise zwischengeschaltete Kondensatoren, erfolgen. Zudem können zwischen den Pixeln und den Analog-Digital-Wandlern Verstärkerschaltungen zum Verstärken der Pixelsignale vorgesehen sein, insbesondere Spaltenverstärker.

Der Bildwandler kann insbesondere mehrere Wandlereinheiten aufweisen, wobei jede Wandlereinheit bei einigen Ausführungsformen einer einzigen Spalte oder bei anderen Ausführungsformen mehreren Spalten des Bildsensors zugeordnet sein kann. Jede Wandlereinheit kann auch einer oder mehreren Spaltenleitungen zugeordnet sein. Beispielsweise kann für jede Spalte und jede Spaltenleitung des Bildsensors eine zugehörige Wandlereinheit vorgesehen sein, so dass sämtliche Pixel einer Zeile gleichzeitig ausgelesen und deren analogen Signale an die jeweiligen Analog-Digital-Wandler der Wandlereinheiten angelegt werden können. Ferner ist es möglich, dass eine Wandlereinheit mehreren Spalten des Bildsensors, zum Beispiel zwei Spalten oder vier Spalten von Pixeln, zugeordnet ist, so dass beispielsweise in den Spalten abwechselnd bzw. alternierend Pixel ausgelesen und deren Signale digitalisiert werden können. Dabei kann insbesondere ein Pixel einer Spalte ausgelesen und die jeweiligen Referenzspannungssignale und Bildspannungssignale können gebildet werden, während zuvor gebildete Referenzspannungssignale und Bildspannungssignale eines zuvor ausgelesenen Pixels einer anderen Spalte digitalisiert werden können. Ferner kann eine Wandlereinheit mehreren Spaltenleitungen zugeordnet sein, deren Pixel in einer gemeinsamen Spalte oder in verschiedenen Spalten angeordnet sein können. Beispielsweise können die Pixel einer Spalte mehreren Spaltenleitungen zugeordnet sein, beispielsweise zwei oder vier Spaltenleitungen, wobei für sämtliche der mehreren Spaltenleitungen eine gemeinsame Wandlereinheit vorgesehen sein kann.

Grundsätzlich kann ein jeweiliges Paar von Analog-Digital-Wandlern für eine Spalte oder für eine Gruppe von mehreren Spalten vorgesehen sein. Zum Beispiel kann ein jeweiliges Paar von Analog-Digital-Wandlern für zwei, vier oder acht Spalten vorgesehen sein. Dabei müssen die Spalten, die als Gruppe einem jeweiligen Paar von Analog-Digital-Wandlern zugeordnet sind, nicht zwangsläufig nebeneinander angeordnet sein. Zudem können für jede der Spalten eine oder mehrere Spaltenleitungen vorgesehen sein, welche dem Paar von Analog-Digital-Wandlern zugeordnet sind. Es ist auch möglich, dass die Pixel einer Spalte unterteilt sind, wobei ein erster Teil der Pixel der Spalte einem ersten Paar von Analog-Digital-Wandlern zugeordnet ist, während ein zweiter Teil der Pixel der Spalte einem zweiten Paar von Analog-Digital-Wandlern zugeordnet ist.

Die Analog-Digital-Wandler und/oder die Wandlereinheit können ein Teil des Bildsensors sein. Insbesondere können die Analog-Digital-Wandler in demselben Substrat gebildet sein wie die Pixel des Bildsensors. Alternativ dazu können die Analog-Digital-Wandler und/oder die Wandlereinheit als gesonderte Einheiten des Bildwandlers mit dem Bildsensor verbunden sein. Ein Integrieren der Analog-Digital-Wandler in den Bildsensor kann dabei eine möglichst kompakte Ausbildung des Bildwandlers ermöglichen, während durch eine getrennte Anordnung bzw. Ausbildung der Analog-Digital-Wandler insbesondere ein durch während der Digitalisierung entstehende Wärme bedingtes Rauschen des Bildsensors vermindert werden kann.

Auch die Steuereinrichtung des Bildwandlers kann teilweise oder vollständig ein integraler Teil des Bildsensors sein. Insbesondere die Steuereinrichtung teilweise oder vollständig in demselben Substrat gebildet sein wie die Pixel des Bildsensors. Alternativ kann die Steuereinrichtung teilweise oder vollständig als gesonderte Einheit des Bildwandlers mit dem Bildsensor verbunden sein. Die Steuereinrichtung kann auch einen verteilten Aufbau besitzen, wobei verschiedene Abschnitte der Steuereinrichtung für unterschiedliche Steuerungsaufgaben zuständig sind (z.B. Steuern des Auslesens der Pixel, Steuern des Digitalisierens der Signale). Die Steuereinrichtung kann beispielsweise eine oder mehrere der folgenden Einrichtungen umfassen: einen integrierten Schaltkreis (IC), einen Mikroprozessor, eine zentrale Recheneinheit (CPU), eine Anwendungsspezifische integrierte Schaltung (ASIC) oder ein Field Programmable Gate Array (FPGA).

Weitere Ausführungsformen der Erfindung sind den abhängigen Ansprüchen, der Beschreibung sowie den Zeichnungen zu entnehmen.

Bei einigen Ausführungsformen kann die Wandlereinheit dazu ausgebildet sein, das Referenzspannungssignal mittels des ersten Analog-Digital-Wandlers in den digitalen Referenzsignalwert zu wandeln und gleichzeitig das Bildspannungssignal mittels des zweiten Analog-Digital-Wandlers in den digitalen Bildsignalwert zu wandeln.

Der erste Analog-Digital-Wandler und der zweite Analog-Digital-Wandler können somit gleichzeitig und insbesondere synchronisiert betrieben werden, um die jeweiligen anliegenden analogen Signale, also das Referenzspannungssignal und das Bildspannungssignal, gleichzeitig wandeln bzw. digitalisieren zu können. Für einen synchronisierten Betrieb der Analog-Digital-Wandler kann beispielsweise eine gemeinsame Spannungsrampe generiert und können Taktzähler synchronisiert werden (insbesondere gemeinsam gestartet werden), wie nachfolgend noch erläutert wird. Durch einen solchen gleichzeitigen und insbesondere synchronisierten Betrieb der Analog-Digital-Wandler können der Bildsignalwert und der Referenzsignalwert mit gleichen systematischen Fehlern behaftet sein, welche durch eine nachfolgende Subtraktion des Referenzsignalwerts von dem Bildsignalwert ausgeglichen werden können. Hierbei können beispielsweise für jede Spalte bzw. jede Spaltenleitung jeweilige Wandlereinheiten mit Analog-Digital-Wandlern vorgesehen sein, so dass sämtliche Pixel einer Zeile gleichzeitig ausgelesen und deren analogen Signale gewandelt werden können. Durch das Ausgleichen der während des Digitalisierens erzeugten Fehler kann trotz dieses zeilenweisen Auslesens und Wandelns das Entstehen eines die gesamte Zeile betreffenden und dadurch für das menschliche Auge deutlich wahrnehmbaren Offsets in dem digitalisierten Bild verhindert werden. Auch bei einem lediglich nacheinander erfolgenden Auslesen und Digitalisieren der Pixel einer Zeile, beispielsweise bei einer Zuordnung einer Wandlereinheit zu mehreren Spalten von Pixeln, kann ein durch das Digitalisieren bedingtes Entstehen von Fehlern bzw. Schwankungen der für die nacheinander ausgelesenen Pixel einer Zeile ermittelten digitalen Werte verhindert werden, indem die Referenzspannungssignale und die Bildspannungssignale der jeweiligen Pixel stets gleichzeitig gewandelt werden, so dass die für diesen Digitalisierungsprozess maßgeblichen Fehler korrekt kompensiert werden.

Bei einigen Ausführungsformen kann die Wandlereinheit einen Rampengenerator umfassen und dazu ausgebildet sein, eine gemeinsame Spannungsrampe für den ersten Analog-Digital-Wandler und für den zweiten Analog-Digital-Wandler zum gleichzeitigen Wandeln des Referenzspannungssignals und des Bildspannungssignals zu generieren. Der Rampengenerator kann von der Steuereinrichtung des Bildwandlers steuerbar sein.

Der erste und der zweite Analog-Digital-Wandler können dabei einen jeweiligen Komparator mit einem ersten Eingang und einem zweiten Eingang aufweisen, wobei an den ersten Eingängen des ersten und des zweiten Analog-Digital-Wandlers die gemeinsame Spannungsrampe anliegen kann, während an dem zweiten Eingang des ersten Analog-Digital-Wandlers das Referenzspannungssignal und an dem zweiten Eingang des zweiten Analog-Digital-Wandlers das Bildspannungssignal mittels der Steuereinrichtung angelegt werden kann. Durch eine solche gemeinsame Spannungsrampe kann erreicht werden, dass beide digitalen Werte, der Bildsignalwert und der Referenzsignalwert, welche durch das Digitalisieren der zugrundeliegenden analogen Signale, des Bildspannungssignals und des Referenzspannungssignals, gebildet werden, mit gleichen, auf der zum Digitalisieren genutzten Spannungsrampe beruhenden Fehlern behaftet sind, die somit durch Subtrahieren des Referenzsignalwerts von dem Bildsignalwert ausgeglichen werden können. Beispielsweise ein Offset der Spannungsrampe, welcher für aufeinanderfolgende Digitalisierungsprozesse aufgrund von statistischen Schwankungen verschieden sein kann, wirkt sich dadurch gleich auf den Bildsignalwert und den Referenzsignalwert eines jeweiligen Pixels aus, so dass ein solcher Effekt durch eine Subtraktion ausgeglichen werden kann.

Bei einigen Ausführungsformen kann der erste Analog-Digital-Wandler einen ersten Taktzähler und der zweite Analog-Digital-Wandler einen zweiten Taktzähler aufweisen, wobei die Wandlereinheit dazu ausgebildet sein kann, die Taktzähler des ersten Analog-Digital-Wandlers und des zweiten Analog-Digital-Wandlers zu synchronisieren. Durch das synchrone Betreiben von Taktzählern für die beiden Analog-Digital-Wandler kann insgesamt ein synchronisierter Digitalisierungsprozess für das Referenzspannungssignal und das Bildspannungssignal erreicht werden, um den Bildsignalwert und den Referenzsignalwert mit möglichst identischen bzw. einander möglichst exakt entsprechenden und dadurch ausgleichbaren Fehlern zu erzeugen. Etwaige, durch verschieden laufende oder beispielsweise nicht vollständig gleichzeitig gestartete Taktzähler bedingte Abweichungen zwischen den gleichzeitig gewandelten analogen Signalen können dadurch vermieden werden.

Insbesondere kann es dabei vorgesehen sein, den ersten Taktzähler und den zweiten Taktzähler durch ein gemeinsames Startsignal zu starten. Das gemeinsame Startsignal kann insbesondere von der Steuereinrichtung des Bildwandlers erzeugt werden. Dadurch kann sichergestellt werden, dass die beiden Taktzähler zum gleichen Zeitpunkt beginnen, Taktschritte zu zählen, so dass ein relativer Fehler zwischen dem zu ermittelnden Bildspannungswert und dem zu ermittelnden Referenzspannungswert aufgrund unterschiedlicher Startzeitpunkte der jeweiligen Taktzähler vermieden werden kann. Ferner kann das Startsignal zum Starten der Taktzähler auch an den Rampengenerator übermittelt werden, so dass die Spannungsrampe, der erste Taktzähler und der zweite Taktzähler synchron gestartet werden können.

Um das an einem Analog-Digital-Wandler anliegende Spannungssignal zu digitalisieren, kann der Taktzähler des jeweiligen Analog-Digital-Wandlers gestoppt werden, sobald die Spannung einer für die beiden Analog-Digital-Wandler gemeinsam generierten Spannungsrampe das an dem Analog-Digital-Wandler anliegende Spannungssignal, also das Referenzspannungssignal oder das Bildspannungssignal, erreicht. Der Anzahl an zwischen dem Startsignal und dem Stopp des Taktzählers erfolgten Taktschritten kann sodann ein digitaler Wert zugeordnet werden, um den Bildsignalwert oder den Referenzsignalwert zu bilden. Folglich können sich die jeweiligen Zeitpunkte, an welchen die Taktzähler gestoppt werden, in Abhängigkeit von der jeweiligen Höhe der anliegenden Spannungssignale voneinander unterscheiden.

Ferner kann, insbesondere zusätzlich zu der Übermittlung eines gemeinsamen Startsignals an den ersten Taktzähler und den zweiten Taktzähler, bei einigen Ausführungsformen vorgesehen sein, auch den Takt der beiden Taktzähler zu synchronisieren. Dazu kann die Wandlereinheit beispielsweise einen für den ersten Taktzähler und den zweiten Taktzähler gemeinsamen Taktgenerator aufweisen, welcher den Takt für die beiden Taktzähler vorgibt, so dass die beiden Taktzähler zeitgleich einen jeweiligen Taktschritt ausführen können. Insbesondere kann die Wandlereinheit somit eine gemeinsame Clock für den ersten und den zweiten Taktzähler aufweisen, welche den Takt für die beiden Taktzähler vorgibt. Auch ein möglicher relativer Fehler zwischen dem anhand der Anzahl an Taktschritten des ersten Taktzählers ermittelten Referenzsignalwerts und dem anhand der Anzahl an Taktschritten des zweiten Taktzählers ermittelten Bildsignalwerts kann somit verhindert werden. Der Taktgenerator kann bei einigen Ausführungsformen auch dazu ausgebildet sein, das gemeinsame Startsignal für den ersten Taktzähler und den zweiten Taktzähler zu generieren. Der Taktgenerator kann bei einigen Ausführungsformen von der Steuereinrichtung des Bildwandlers gesteuert sein.

Der Bildwandler kann ferner bei einigen Ausführungsformen eine Recheneinheit umfassen, welche dazu ausgebildet ist, für jedes Pixel einen Pixelbildwert durch Subtrahieren des digitalen Referenzsignalwerts von dem digitalen Bildsignalwert zu bestimmen. Der Bildwandler kann somit dazu ausgebildet sein, für jedes Pixel letztlich einen digitalen Pixelbildwert auszugeben, welcher proportional zu der während der Belichtung erzeugten elektrischen Ladung bzw. proportional zu dem während der Belichtung auftreffenden Licht ist. Dabei kann durch das Abziehen des Referenzsignalwerts von dem Bildsignalwert einerseits ein etwaiges Rauschen des Bildsensors kompensiert sein, welches sich in dem Bildsignalwert selbst noch niederschlagen kann. Andererseits können, wie vorstehend erläutert, durch dieses Subtrahieren auch während des Digitalisierungsprozesses entstehende Fehler ausgeglichen werden, mit welchen die beiden aus den analogen Signalen gewonnenen digitalen Werte, der Bildsignalwert und der Referenzsignalwert, in gleicher Weise behaftet sind. Somit kann ein digitaler Pixelbildwert ausgegeben werden, der präzise proportional zu der während der Belichtung erzeugten Ladung an dem lichtempfindlichen Detektorelement ist.

Bei einigen Ausführungsformen kann der Bildsensor wenigstens eine Speichereinheit aufweisen, wobei die Speichereinheit einen ersten Speicher zum Halten des Referenz-Spannungssignals umfasst. Ferner kann die Speichereinheit bei einigen Ausführungsformen einen ersten Speicher zum Halten des Referenz-Spannungssignals und einen zweiten Speicher zum Halten des Bildspannungssignals umfassen.

Insbesondere kann dabei wenigstens eine Speichereinheit für jede Spalte und/oder jede Spaltenleitung des Bildsensors vorgesehen sein. Jeder Spalte und/oder jeder Spaltenleitung des Bildsensors kann wenigstens eine Speichereinheit zugeordnet sein. Ferner kann eine Speichereinheit grundsätzlich auch mehreren Spalten und/oder Spaltenleitungen zugeordnet sein, so dass beispielsweise abwechselnd jeweilige Signale von Pixeln verschiedener Spalten bzw. über verschiedene Spaltenleitungen in die Speichereinheit eingelesen werden können.

Die Speicher können insbesondere jeweilige Kondensatoren umfassen und/oder als Kondensatoren ausgebildet sein, an welchen die zu haltenden analogen Signale als eine Spannung gehalten werden können. Die Spannung kann dabei, je nach zu haltendem analogen Signal, proportional zu der während einer Belichtung an dem Detektorelement erzeugten Ladung bzw. proportional zu dem Referenzwert sein. Die gehaltenen analogen Signale können durch Koppeln des jeweiligen Speichers bzw. Kondensators mit den Analog-Digital-Wandlern gleichzeitig an die jeweiligen Signaleingänge angelegt werden, so dass die gehaltenen Spannungen Eingangssignale für die Analog-Digital-Wandler zum Bestimmen des Referenzsignalwertes und/oder des Bildsignalwertes bilden können.

Die Speichereinheit kann insbesondere zumindest einen ersten Speicher zum Halten des Referenzspannungssignals umfassen, um das Referenzspannungssignal für ein nachfolgendes gleichzeitiges Digitalisieren mit dem Bildspannungssignal speichern zu können, während das Bildspannungssignal gebildet wird. Insbesondere kann das Referenzspannungssignal dabei über die Spaltenleitung durch Schließen eines Auswahlschalters auf einen Kondensator gespeist werden, um das Referenzspannungssignal nach dem Öffnen des Auswahlschalters an dem Kondensator halten und die an dem Detektorelement erzeugte Ladung über die Spaltenleitung auslesen zu können. Das Bildspannungssignal kann dabei ebenfalls, insbesondere kurzfristig, gespeichert werden, wozu beispielsweise ein als zweiter Kondensator ausgebildeter zweiter Speicher vorgesehen sein kann, welcher durch einen weiteren Auswahlschalter wahlweise mit der Spaltenleitung gekoppelt werden kann. Alternativ dazu kann das Bildspannungssignal auch unmittelbar an den zweiten Analog-Digital-Wandler angelegt werden.

Grundsätzlich kann der erste Speicher mit der jeweiligen Spaltenleitung dauerhaft gekoppelt oder über einen Schalter koppelbar sein. Ferner kann der erste Speicher mit dem ersten Analog-Digital-Wandler dauerhaft gekoppelt oder über einen Schalter koppelbar sein. Auch der zweite Speicher kann - sofern ein zweiter Speicher vorgesehen ist - mit der jeweiligen Spaltenleitung dauerhaft gekoppelt oder über einen Schalter koppelbar sein. Ferner kann der zweite Speicher mit dem zweiten Analog-Digital-Wandler dauerhaft gekoppelt oder über einen Schalter koppelbar sein. Generell können zwischen den Speichern und den Analog-Digital-Wandlern einzelne Schalter oder ein Schalternetzwerk mit mehreren Schaltern vorgesehen sein.

Bei einigen Ausführungsformen kann der Bildsensor eine Speicherrücksetzeinrichtung aufweisen, welche dazu ausgebildet ist, den Speicher wahlweise auf einen Speicherreferenzwert zurückzusetzen. Insbesondere kann es dabei vorgesehen sein, den Speicher zwischen dem Auslesen verschiedener Pixel zurückzusetzen. Dazu kann die Speicherrücksetzeinrichtung beispielsweise einen Schalter umfassen, über welche der jeweilige Speicher wahlweise mit einem Referenzpotential oder einer Stromquelle koppelbar ist, um den Speicher zum Empfangen und korrekten Halten eines jeweiligen nachfolgenden Referenzspannungssignals bzw. Bildspannungssignals vorzubereiten.

Der Bildsensor weist erfindungsgemäß ferner wenigstens eine erste und eine zweite Speichereinheit auf, wobei jede der ersten und zweiten Speichereinheiten einen ersten Speicher zum Halten des Referenzspannungssignals und einen zweiten Speicher zum Halten des Bildspannungssignals umfasst, wobei die Steuereinrichtung dazu ausgebildet ist, wahlweise den Signaleingang des ersten Analog-Digital-Wandlers mit dem ersten Speicher der ersten Speichereinheit und gleichzeitig den Signaleingang des zweiten Analog-Digital-Wandlers mit dem zweiten Speicher der ersten Speichereinheit zu verbinden, oder den Signaleingang des ersten Analog-Digital-Wandlers mit dem ersten Speicher der zweiten Speichereinheit und gleichzeitig den Signaleingang des zweiten Analog-Digital-Wandlers mit dem zweiten Speicher der zweiten Speichereinheit zu verbinden.

Insbesondere können die Speicher der Speichereinheiten als jeweilige Kondensatoren ausgebildet sein, um das Referenzspannungssignal und das Bildspannungssignal vor dem Anlegen an die Analog-Digital-Wandler bzw. vor dem Digitalisieren zu halten. Bei solchen Ausführungsformen sind folglich einem einzigen ersten Analog-Digital-Wandler und einem einzigen zweiten Analog-Digital-Wandler wenigstens eine erste und eine zweite Speichereinheit zugeordnet, die zwei jeweilige Speicher zum Halten eines Bildspannungssignals und eines Referenzspannungssignals aufweisen. Die beiden Speichereinheiten können dabei beispielsweise einer gemeinsamen Spaltenleitung oder verschiedenen Spaltenleitungen und/oder Spalten von Pixeln zugeordnet sein.

Indem die Steuereinrichtung dazu ausgebildet ist, wahlweise die Signaleingänge der beiden Analog-Digital-Wandler mit den Speichern der ersten Speichereinheit oder den Speichern der zweiten Speichereinheit zu verbinden, ist es insbesondere möglich, ein Referenzspannungssignal und ein Bildspannungssignal eines ersten Pixels in eine der beiden Speichereinheiten einzulesen, während in einem gleichen Zeitintervall das in dem ersten Speicher der anderen Speichereinheit gehaltene Referenzspannungssignal und das in dem zweiten Speicher der anderen Speichereinheit gehaltene Bildspannungssignal eines weiteren Pixels digitalisiert werden. Zudem kann dadurch, dass eine einzige Wandlereinheit mit einem ersten Analog-Digital-Wandler und einem zweiten Analog-Digital-Wandler zwei Speichereinheiten zugeordnet ist, die Gesamtzahl der benötigten Analog-Digital-Wandler reduziert werden, um beispielsweise die Ausdehnung des Bildwandlers oder ein durch den Betrieb der Analog-Digital-Wandler bedingtes Entstehen von Wärme begrenzen zu können.

Ferner sind die erste und die zweite Speichereinheit gemäß einer ersten Realisierung der Erfindung verschiedenen Spalten von Pixeln zugeordnet, so dass zumindest zwei Spalten von Pixeln eine gemeinsame Wandlereinheit mit einem einzigen ersten Analog-Digital-Wandler und einem einzigen zweiten Analog-Digital-Wandler teilen können. Die Anzahl an benötigten Analog-Digital-Wandlern des Bildwandlers kann dadurch im Vergleich zu herkömmlichen Lösungen beibehalten werden, obwohl ein gleichzeitiges Digitalisieren der Referenzspannungssignale und der Bildspannungssignale jeweiliger Pixel und das Ausgleichen von während des Digitalisierens entstehenden Fehlern ermöglicht wird.

Gemäß einer zweiten Realisierung der Erfindung sind die erste und die zweite Speichereinheit derselben Spalte von Pixeln zugeordnet. Dabei sind die erste und die zweite Speichereinheit verschiedenen Spaltenleitungen zugeordnet. Beispielsweise kann es vorgesehen sein, die Pixel einer Spalte in zwei Gruppen bzw. Abschnitte zu teilen, denen eine jeweilige Spaltenleitung zugeordnet ist. Aus DE 10 2008 052 916 A1 ist beispielsweise ein Bildsensor bekannt, bei welchem das Pixelfeld in eine obere Hälfte und eine untere Hälfte unterteilt ist, in welchen voneinander separate Spaltenleitungen verlaufen. Grundsätzlich sind jedoch auch andere Unterteilungen möglich und die Spaltenleitungen können parallel zueinander und in einer Richtung verlaufen, um mit den jeweiligen Speichereinheiten gekoppelt werden zu können, welche daraufhin mit den Analog-Digital-Wandlern verbunden werden können. Ferner können die Speichereinheiten derselben Spaltenleitung zugeordnet sein, wobei die Steuereinrichtung dazu ausgebildet sein kann, die Spaltenleitung wahlweise mit einem der Speicher der ersten Speichereinheit oder einem der Speicher der zweiten Speichereinheit zu koppeln. Ein solches Bereitstellen von zwei Speichereinheiten für eine Spalte von Pixeln kann dabei ein beschleunigtes Auslesen der Spalte ermöglichen, indem die zum Einlesen eines Referenzspannungssignals und eines Bildspannungssignals benötigte Zeit zum Digitalisieren der zuvor in die Speichereinheiten eingelesenen analogen Signale eines weiteren Pixels der Spalte genutzt wird.

Bei einigen Ausführungsformen kann der Bildsensor für jede Spalte von Pixeln ein oder mehrere Paare von erster und zweiter Speichereinheit aufweisen, wobei der Bildsensor für ein Paar oder für zwei Paare von erster und zweiter Speichereinheit ein jeweiliges Paar von erstem und zweitem Analog-Digital-Wandler aufweisen kann. Insbesondere kann der Bildsensor für jede Spalte von Pixeln zwei oder vier Paare von erster und zweiter Speichereinheit aufweisen. Beispielsweise kann es vorgesehen sein, dass eine Wandlereinheit mit einem Paar von erstem und zweitem Analog-Digital-Wandler zwei Paaren von erster und zweiter Speichereinheit zugeordnet ist, wobei ein jeweiliges Paar der zwei Paare von erster und zweiter Speichereinheit einer Spalte bzw. Spaltenleitung zugeordnet sein kann. Dabei können beispielsweise Referenzspannungssignale und Bildspannungssignale jeweiliger erster Pixel der beiden Spaltenleitungen in einem Zeitintervall in die jeweilige erste Speichereinheit der Paare von Speichereinheiten eingelesen werden, während die jeweiligen zweiten Speichereinheiten in dem gleichen Zeitintervall nacheinander mit den Analog-Digital-Wandlern gekoppelt werden, um die darin gehaltenen Referenzspannungssignale und Bildspannungssignale zu wandeln. Auch hierdurch kann die zum Auslesen des Pixels benötigte Zeit reduziert werden, da für das Auslesen eines jeweiligen Bildspannungssignals eine Zeit erforderlich sein kann, während derer zwei Digitalisierungsprozesse durchgeführt werden können. Somit können in einem für das Einlesen von Referenzspannungssignalen und Bildspannungssignalen benötigten Zeitintervall gleichzeitig solche analoge Signale für zwei Pixel über zwei Spaltenleitungen gebildet und in jeweiligen ersten Speichereinheiten gespeichert werden, während in demselben Zeitintervall nacheinander zwei Digitalisierungsprozesse durch Wandeln von zuvor in einer jeweiligen zweiten Speichereinheit gespeicherten analogen Signalen durchgeführt werden können.

Bei einigen Ausführungsformen kann die Steuereinrichtung dazu ausgebildet sein,
- während eines ersten Zeitintervalls das Referenzspannungssignal und das Bildspannungssignal eines ersten Pixels in die erste Speichereinheit einzulesen und das Referenzspannungssignal und das Bildspannungssignal eines zweiten Pixels aus der zweiten Speichereinheit an den Signaleingang des ersten und des zweiten Analog-Digital-Wandlers anzulegen und dort gleichzeitig in den Referenzsignalwert und den Bildsignalwert zu wandeln; und
- während eines zweiten Zeitintervalls das Referenzspannungssignal und das Bildspannungssignal eines dritten Pixels in die zweite Speichereinheit einzulesen und das Referenzspannungssignal und das Bildspannungssignal des ersten Pixels aus der ersten Speichereinheit an den Signaleingang des ersten und des zweiten Analog-Digital-Wandlers anzulegen und dort gleichzeitig in den Referenzsignalwert und den Bildsignalwert zu wandeln.

Das Einlesen des Referenzspannungssignals und des Bildspannungssignals der jeweiligen Pixel in die zugeordneten Speichereinheiten kann dabei insbesondere über die jeweilige zugeordnete Spaltenleitung erfolgen, wobei grundsätzlich nacheinander das Referenzspannungssignal in den jeweiligen ersten Speicher und das Bildspannungssignal in den jeweiligen zweiten Speicher der Speichereinheit eingelesen werden kann. Insbesondere kann das Einlesen des Referenzspannungssignals und des Bildspannungssignals in die jeweilige Speichereinheit somit zumindest das Erzeugen dieser Signale, das Ausgeben der Signale an bzw. über die zugeordnete Spaltenleitung und das Einspeisen der Signale in die Speichereinheit umfassen.

Die eingelesenen Referenzspannungssignale und Bildspannungssignale können insbesondere gleichzeitig an die Signaleingänge des ersten und des zweiten Analog-Digital-Wandlers angelegt werden. Dieses Anlegen kann dabei insbesondere das Koppeln des Signaleingangs des ersten Analog-Digital-Wandlers mit dem ersten Speicher der jeweiligen Speichereinheit und das Koppeln des Signaleingangs des zweiten Analog-Digital-Wandlers mit dem zweiten Speicher der jeweiligen Speichereinheit umfassen.

Das zweite Zeitintervall kann unmittelbar oder verzögert auf das erste Zeitintervall folgen.

Während des ersten Zeitintervalls werden bei solchen Ausführungsformen folglich das Referenzspannungssignal und das Bildspannungssignal des ersten Pixels gebildet und gespeichert, während die dazu erforderliche Zeit genutzt wird, um das Referenzspannungssignal und das Bildspannungssignal des zweiten Pixels in diesem ersten Zeitintervall zu digitalisieren. Die analogen Signale des zweiten Pixels können dabei insbesondere in einem vorhergehenden Zeitintervall in die zweite Speichereinheit eingespeichert worden sein. Während des zweiten Zeitintervalls werden daraufhin das in dem ersten Zeitintervall gespeicherte Referenzspannungssignal und das in dem ersten Zeitintervall gespeicherte Bildspannungssignal des ersten Pixels digitalisiert, während in diesem zweiten Zeitintervall das Referenzspannungssignal und das Bildspannungssignal eines dritten Pixels gebildet und in die zweite Speichereinheit gespeichert werden. Das erste Zeitintervall und das zweite Zeitintervall können dabei zyklisch wiederholt werden, um den Bildsensor auf diese Weise sukzessive auszulesen und ein jeweiliges Zeitintervall zum Bilden analoger Referenzspannungssignale und Bildspannungssignale eines Pixels und zum Digitalisieren analoger Signale eines weiteren Pixels zu nutzen. So können beispielsweise das Referenzspannungssignal und das Bildspannungssignal des dritten Pixels in einem dritten Zeitintervall gewandelt werden, während analoge Signale eines vierten Pixels in die erste Speichereinheit eingelesen werden. Grundsätzlich können das erste und das zweite Zeitintervall unmittelbar aufeinander folgen und zyklisch wiederholt werden, während es auch möglich ist, dass weitere Zeitintervalle oder Aktionen zwischen und/oder in dem ersten Zeitintervall und/oder dem zweiten Zeitintervall vorgesehen sind.

Zum schnelleren Auslesen einer Spalte kann beispielsweise ein Pixel derselben Spalte ausgelesen bzw. dessen Referenzspannungssignal und Bildspannungssignal in eine der Speichereinheiten eingelesen werden, während das Referenzspannungssignal und das Bildspannungssignal eines weiteren Pixels dieser Spalte durch Anlegen der anderen Speichereinheit an die Analog-Digital-Wandler gleichzeitig digitalisiert werden. Die Spalte kann dabei sukzessive durchgegangen werden, wobei jeweils analoge Signale eines Pixels gebildet und gespeichert werden, während die analogen Signale eines vorhergehend ausgelesenen Pixels gewandelt werden. Hierbei können folglich zum beschleunigten Auslesen zumindest zwei Analog-Digital-Wandler pro Spalte vorgesehen sein.

Alternativ dazu können auch zwei Analog-Digital-Wandler gemeinsam für zwei Spalten vorgesehen sein, wobei beispielsweise ein Pixel der einen Spalte ausgelesen und das Referenzspannungssignal und das Bildspannungssignal dieses Pixels in einer jeweiligen Speichereinheit gespeichert werden können, während die zuvor gebildeten analogen Signale eines Pixels der anderen Spalte durch Anlegen der zugeordneten Speichereinheit an die Analog-Digital-Wandler gewandelt werden. Durch ein solches Vorgehen kann insbesondere die Anzahl der Analog-Digital-Wandlern pro Spalte reduziert werden, wobei die Auslesezeit pro Zeile gegenüber einem Bereitstellen von zwei Analog-Digital-Wandlern pro Spaltenleitung bzw. Spalte erhöht sein kann. Grundsätzlich kann es jedoch auch vorgesehen sein, mehr als zwei Speichereinheiten, beispielsweise vier Speichereinheiten, einem Analog-Digital-Wandler zuzuordnen. Dabei kann beispielsweise in einem Zeitintervall gleichzeitig in zwei Spalten ein jeweiliges Pixel ausgelesen und die zugehörigen Referenzspannungssignale und Bildspannungssignale in zugeordneten Speichereinheiten gespeichert werden, während zuvor gebildete Referenzspannungssignale und Bildspannungssignale zweier Pixel aus den jeweiligen Spalten, die in den verbleibenden zwei Speichereinheiten gehalten sind, in dem Zeitintervall gewandelt werden. Die gegenüber dem Digitalisierungsprozess erhöhte Zeit zum Auslesen eines Bildspannungssignals und eines Referenzspannungssignals eines Pixels kann dabei genutzt werden, um zwei Digitalisierungsprozesse durchzuführen und die Zeit zum Auslesen des Bildsensors zu verringern.

Bei einigen Ausführungsformen können das erste Pixel, das zweite Pixel und das dritte Pixel derselben Spalte von Pixeln angehören und derselben Spaltenleitung zugeordnet sein. Alternativ dazu können das erste Pixel, das zweite Pixel und das dritte Pixel bei anderen Ausführungsformen derselben Spalte von Pixeln angehören, wobei das erste Pixel und das zweite Pixel verschiedenen Spaltenleitungen zugeordnet sind. Ferner kann es bei einigen Ausführungsformen vorgesehen sein, dass das erste Pixel und das zweite Pixel verschiedenen Spalten von Pixeln angehören.

Beispielsweise kann es somit vorgesehen sein, dass das erste Pixel, das zweite Pixel und das dritte Pixel über dieselbe Spaltenleitung ausgelesen werden, sodass die Spaltenleitung abwechselnd mit den beiden Speichereinheiten gekoppelt werden kann, um die Signale der Pixel sukzessive einzulesen. Ferner können das erste Pixel, das zweite Pixel und das dritte Pixel zwar in derselben Spalte von Pixeln angeordnet, jedoch verschiedenen Spaltenleitungen zugeordnet sein. Dabei können die beiden Speichereinheiten beispielsweise einer jeweiligen Spaltenleitung zugeordnet sein, so dass insbesondere zwei Spaltenleitungen einer Spalte nacheinander bzw. abwechselnd mit einer jeweiligen zugeordneten der beiden Speichereinheiten gekoppelt werden können, um jeweilige analoge Signale eines der jeweiligen Spaltenleitung zugeordneten Pixels einzulesen und währenddessen zuvor in die andere Speichereinheit eingelesene analoge Signale eines Pixels der anderen Spaltenleitung auszulesen. So können beispielsweise das erste Pixel und das zweite Pixel verschiedenen Spaltenleitungen zugeordnet sein und das dritte Pixel kann derselben Spaltenleitung wie das zweite Pixel zugeordnet sein.

Das erste Pixel und das zweite Pixel können auch verschiedenen Spalten angehören, wobei beispielsweise das zweite Pixel und das dritte Pixel einer ersten Spalte von Pixeln angehören können, während das erste Pixel einer zweiten Spalte von Pixeln angehört. Die Wandlereinheit mit einem ersten Analog-Digital-Wandler und einem zweiten Analog-Digital-Wandler kann somit insbesondere zwei verschiedenen Spalten von Pixeln zugeordnet sein, so dass die analogen Signale eines Pixels der einen Spalte gewandelt werden können, während die analogen Signale eines Pixels der anderen Spalte in die zugeordnete Speichereinheit eingelesen werden.

Bei einigen Ausführungsformen können die erste Speichereinheit und die zweite Speichereinheit einer einzigen Spaltenleitung einer jeweiligen Spalte zugeordnet sein, wobei die Steuereinheit dazu ausgebildet sein kann, während des ersten Zeitintervalls die erste Speichereinheit mit der einzigen Spaltenleitung zu koppeln und die zweite Speichereinheit von der einzigen Spaltenleitung zu entkoppeln; und wobei die Steuereinheit dazu ausgebildet sein kann, während des zweiten Zeitintervalls die zweite Speichereinheit mit der einzigen Spaltenleitung zu koppeln und die erste Speichereinheit von der einzigen Spaltenleitung zu entkoppeln. Insbesondere können dabei wenigstens ein erster Schalter und wenigstens ein zweiter Schalter vorgesehen sein, so dass die einzige Spaltenleitung während des ersten Zeitintervalls über den ersten Schalter mit der ersten Speichereinheit gekoppelt und über den zweiten Schalter von der zweiten Speichereinheit entkoppelt werden kann, während die einzige Spaltenleitung in dem zweiten Zeitintervall über den zweiten Schalter mit der zweiten Speichereinheit gekoppelt und über den ersten Schalter von der ersten Speichereinheit entkoppelt werden kann. Die Steuereinrichtung kann folglich dazu ausgebildet sein, analoge Signale von über eine einzige Spaltenleitung ausgelesenen Pixeln sukzessive in jeweilige Speichereinheiten auszulesen. Insbesondere kann die Speichereinheit ferner dazu ausgebildet sein, die jeweilige von der Spaltenleitung entkoppelte Speichereinheit mit den Signaleingängen der Analog-Digital-Wandler zu koppeln, um während des Bildens des Referenzspannungssignals und des Bildspannungssignals eines Pixels zuvor eingelesene analoge Signale eines weiteren Pixels wandeln zu können. Dazu können die Speicher der Speichereinheiten über jeweilige weitere Schalter mit den Signaleingängen der Analog-Digital-Wandlern verbunden sein, so dass die Speicher durch Schließen oder Öffnen der Schalter wahlweise mit den Signaleingängen der Analog-Digital-Wandler gekoppelt bzw. von den Signaleingängen entkoppelt werden können.

Alternativ dazu können die erste Speichereinheit und die zweite Speichereinheit bei einigen Ausführungsformen zwei verschiedenen Spaltenleitungen zugeordnet sein, wobei die Steuereinrichtung dazu ausgebildet sein kann, während des ersten Zeitintervalls die erste Speichereinheit mit einer ersten der zwei verschiedenen Spaltenleitungen zu koppeln und die zweite Speichereinheit von einer zweiten der zwei verschiedenen Spaltenleitungen zu entkoppeln; und während des zweiten Zeitintervalls die zweite Speichereinheit mit der zweiten der zwei verschiedenen Spaltenleitungen zu koppeln und die erste Speichereinheit von der ersten der zwei verschiedenen Spaltenleitungen zu entkoppeln. Hierbei können die zwei verschiedenen Spaltenleitungen, wie vorstehend erläutert, grundsätzlich derselben Spalte von Pixeln oder zwei verschiedenen Spalten von Pixeln zugeordnet sein. Wiederum kann insbesondere wenigstens ein erster Schalter vorgesehen sein, um die erste Speichereinheit wahlweise mit der ersten Spaltenleitung zu koppeln oder von dieser zu entkoppeln, und es kann wenigstens ein zweiter Schalter vorgesehen sein, um die zweite Spaltenleitung wahlweise mit der zweiten Speichereinheit zu koppeln oder von dieser zu entkoppeln. Eine solche Zuordnung der Speichereinheiten zu verschiedenen Spaltenleitungen ermöglicht es, über die eine Spaltenleitung analoge Signale eines Pixels einzulesen, während zuvor über die andere Spaltenleitung eingelesene analoge Signale eines anderen Pixels digitalisiert werden.

Die Steuereinrichtung kann bei einigen Ausführungsformen dazu ausgebildet sein, während des ersten Zeitintervalls die erste Speichereinheit von dem ersten und dem zweiten Analog-Digital-Wandler zu entkoppeln und die zweite Speichereinheit mit dem ersten und dem zweiten Analog-Digital-Wandler zu koppeln, wobei die Steuereinrichtung ferner dazu ausgebildet sein kann, während des zweiten Zeitintervalls die erste Speichereinheit mit dem ersten und dem zweiten Analog-Digital-Wandler zu koppeln und die zweite Speichereinheit von dem ersten und dem zweiten Analog-Digital-Wandler zu entkoppeln. Insbesondere kann auch hierbei wenigstens ein erster Schalter vorgesehen sein, um die erste Speichereinheit wahlweise mit dem ersten und dem zweiten Analog-Digital-Wandler zu koppeln oder von den Analog-Digital-Wandlern zu entkoppeln, und es kann wenigstens ein zweiter Schalter vorgesehen sein, um die zweite Speichereinheit wahlweise mit dem ersten und dem zweiten Analog-Digital-Wandler zu koppeln oder von den Analog-Digital-Wandlern zu entkoppeln. Insbesondere können zwei erste Schalter und zwei zweite Schalter vorgesehen sein, um die jeweiligen ersten Speicher und zweiten Speicher der beiden Speichereinheiten wahlweise mit den zugeordneten Analog-Digital-Wandlern koppeln zu können.

In einem jeweiligen Zeitintervall kann somit eine der Speichereinheiten mit den Analog-Digital-Wandlern gekoppelt sein, während die andere Speichereinheit in dem Zeitintervall von den Analog-Digital-Wandlern entkoppelt ist. In dem darauffolgenden Zeitintervall kann die Kopplung umgekehrt werden, sodass abwechselnd Signale aus den Speichereinheiten gewandelt bzw. in die Speichereinheiten eingelesen werden können. Die Zeit zum Einlesen analoger Signale eines Pixels in eine der Speichereinheiten kann folglich dazu genutzt werden, in dem gleichen bzw. dem dazu benötigten Zeitintervall zuvor eingelesene analoge Signale eines weiteren Pixels zu wandeln.

Bei einigen Ausführungsformen kann jede Spalte von Pixeln mehrere, insbesondere zwei oder vier, Spaltenleitungen aufweisen, wobei die Pixel einer jeden Spalte verschiedenen der mehreren Spaltenleitungen zugeordnet sein können. Insbesondere können die Pixel einer jeden Spalte über einen jeweiligen Auswahl-Schalter einer jeweiligen der mehreren Spaltenleitungen zugeordnet sein. Beispielsweise können mehrere Spaltenleitungen einer Spalte parallel zueinander verlaufen. Bei einem Pixelfeld mit mehreren Spaltenleitungen pro Spalte kann es insbesondere vorgesehen sein, dass das Pixelfeld in eine obere Hälfte und eine untere Hälfte unterteilt ist, in welchen voneinander separate Spaltenleitungen verlaufen, so dass die jeweiligen Pixel der Spalte in Abhängigkeit von ihrer Position einer der Spaltenleitungen zugeordnet werden können. Grundsätzlich kann jedoch auch eine sonstige Einteilung bzw. Zuteilung von Pixeln einer Spalte zu verschiedenen Spaltenleitungen vorgesehen sein. Die Zuteilung der Pixel zu Spaltenleitungen kann dabei regelmäßig, beispielsweise in Hälften oder Vierteln, oder unregelmäßig sein.

Das jeweilige Pixel kann bei einigen Ausführungsformen ferner einen Ausleseknoten, ein Transfer-Gate, um wahlweise das lichtempfindliche Detektorelement mit dem Ausleseknoten zu koppeln, einen Wandler-Transistor, um die an dem Ausleseknoten vorhandene Ladung in ein Spannungssignal umzusetzen, und einen Auswahl-Schalter umfassen, der mit einem Signalausgang des Wandler-Transistors verbunden ist, um den Signalausgang des Wandler-Transistors wahlweise mit der zugeordneten Spaltenleitung zu koppeln. Alternativ zu einem solchen Vier-Transistor-Aufbau kann das jeweilige Pixel jedoch auch einfacher ausgebildet sein, wie beispielsweise in DE 10 2009 019 034 A1 gezeigt. Ebenso ist es möglich, dass noch zusätzliche Transistoren vorgesehen sind, wobei das jeweilige Pixel beispielsweise in einer Fünf-Transistor-Architektur mit einem Überlauf-Kondensator ausgebildet sein kann.

Die Erfindung bezieht sich ferner auf ein Verfahren zum Auslesen eines Bildsensors, insbesondere eines CMOS-Bildsensors, für elektronische Kameras, welcher eine Vielzahl von in Zeilen und Spalten angeordneten Pixel umfasst, wobei mehreren Pixeln in einer Spalte wenigstens eine gemeinsame Spaltenleitung zugeordnet ist und wobei jedes Pixel ein lichtempfindliches Detektorelement, welches dazu ausgebildet ist, aus während einer Belichtung auftreffendem Licht elektrische Ladung zu erzeugen, und eine Rücksetzeinrichtung umfasst, welche dazu ausgebildet ist, in dem Pixel vorhandene Ladung auf einen Referenzwert zurückzusetzen. Das Verfahren umfasst dabei zumindest die folgenden Schritte:
- Zurücksetzen der in einem jeweiligen Pixel (insbesondere in einem Ausleseknoten des Pixels) vorhandenen Ladung mittels der Rücksetzeinrichtung;
- Koppeln des Pixels mit der Spaltenleitung und Ausgeben eines dem Referenzwert entsprechenden Referenzspannungssignals;
- Koppeln des Pixels mit der Spaltenleitung und Ausgeben eines der erzeugten Ladung entsprechenden Bildspannungssignals; und
- Anlegen des Referenzspannungssignals des jeweiligen Pixels an einen Signaleingang eines ersten Analog-Digital-Wandlers und gleichzeitiges Anlegen des Bildspannungssignals des jeweiligen Pixels an einen Signaleingang eines zweiten Analog-Digital-Wandlers.

Das Belichten des Detektorelements kann vor dem Ausgeben des Bildspannungssignals erfolgen, insbesondere vor oder noch während des Ausgebens des Referenzspannungssignals.

Wie vorstehend erläutert, kann durch das gleichzeitige Anlegen des Referenzspannungssignals und des Bildspannungssignals an die beiden Analog-Digital-Wandler erreicht werden, dass die entsprechenden digitalisierten Werte - der Referenzsignalwert und der Bildsignalwert - mit jeweiligen gleichen auf dem Digitalisierungsprozess beruhenden Fehlern behaftet sind. Durch Subtrahieren der beiden Werte voneinander kann folglich im Zuge des Correlated Double Sampling ein zu der tatsächlich an dem Detektorelement erzeugten Ladung proportionaler digitaler Wert ermittelt und ein etwaiges Rauschen des Bildsensors ausgeglichen werden, wobei zudem durch den Digitalisierungsprozess bedingte Fehler kompensiert werden können. Somit kann jedem Pixel ein zu der tatsächlich erzeugten elektrischen Ladung bzw. ein dem während der Belichtung auftreffendem Licht möglichst exakt proportionaler digitaler Wert ausgegeben werden.

Bei einigen Ausführungsformen kann das Referenzspannungssignal mittels des ersten Analog-Digital-Wandlers in einen digitalen Referenzsignalwert und gleichzeitig das Bildspannungssignal mittels des zweiten Analog-Digital-Wandlers in einen digitalen Bildsignalwert gewandelt werden. Die beiden Analog-Digital-Wandler können somit gleichzeitig zum Digitalisieren der jeweiligen analogen Signale betrieben werden, um das Entstehen unterschiedlicher Fehler des Bildsignalwerts und des Referenzsignalwerts aufgrund voneinander abweichender Digitalisierungsprozesse zu vermeiden.

Es kann bei einigen Ausführungsformen vorgesehen sein, dass eine gemeinsame Spannungsrampe für den ersten Analog-Digital-Wandler und für den zweiten Analog-Digital-Wandler generiert wird. Zudem können die beiden Analog-Digital-Wandler bei einigen Ausführungsformen mit synchronisierten Taktzählern betrieben werden. Der Digitalisierungsprozess kann somit für das Bildspannungssignal und das Referenzspannungssignal eines jeweiligen Pixels möglichst exakt synchronisiert erfolgen, so dass der ausgegebene digitale Bildsignalwert und der ausgegebene digitale Referenzsignalwert mit einander möglichst genau entsprechenden und dadurch vollständig auszugleichenden Fehlern behaftet sein können.

Der Referenzsignalwert kann bei einigen Ausführungsformen von dem Bildsignalwert subtrahiert werden und dadurch kann ein Pixelbildwert gebildet werden. Der Pixelbildwert kann dabei letztlich ausgegeben werden und gibt einen der an dem Detektorelement des jeweiligen Pixels erzeugten Ladung proportionalen Wert an, welcher durch das Abziehen des Referenzsignalwerts von dem Bildsignalwert sowohl bezüglich eines Rauschens des Bildsensors als auch bezüglich Fehler des Digitalisierungsprozesses korrigiert ist.

Der Referenzspannungswert kann bei einigen Ausführungsformen während des Erzeugens des Bildspannungssignals und insbesondere während der noch andauernden Belichtung des Pixels in einem Speicher gehalten werden. Ferner kann das Referenzspannungssignal bei einigen Ausführungsformen in einem ersten Speicher einer Speichereinheit und das Bildspannungssignal in einem zweiten Speicher der Speichereinheit gehalten werden, bevor das Bildspannungssignal und das Referenzspannungssignal auf die jeweiligen Signaleingänge der Analog-Digital-Wandler geleitet werden. Insbesondere kann somit das Referenzspannungssignal zwischengespeichert werden, während das Bildspannungssignal erzeugt wird, um das Referenzspannungssignal und das Bildspannungssignal gleichzeitig an die Signaleingänge der jeweiligen Analog-Digital-Wandler anlegen zu können. Grundsätzlich kann auch das Bildspannungssignal, insbesondere kurzfristig, gehalten werden, bevor das Referenzspannungssignal und das Bildspannungssignal gleichzeitig zu den Signaleingängen der Analog-Digital-Wandler geleitet werden.

Ferner ist bei dem erfindungsgemäßen Verfahren vorgesehen, dass während eines ersten Zeitintervalls das Referenzspannungssignal und das Bildspannungssignal eines ersten Pixels in eine erste Speichereinheit eingelesen werden, wobei während des ersten Zeitintervalls das in einer zweiten Speichereinheit gehaltene Referenzspannungssignal und das in der zweiten Speichereinheit gehaltene Bildspannungssignal eines zweiten Pixels an den Signaleingang des ersten Analog-Digital-Wandlers und des zweiten Analog-Digital-Wandlers angelegt und dort gleichzeitig gewandelt (d.h. digitalisiert) werden. Das Referenzspannungssignal und das Bildspannungssignal des ersten Pixels werden während eines zweiten Zeitintervalls an den Signaleingang des ersten Analog-Digital-Wandlers und des zweiten Analog-Digital-Wandlers angelegt und dort gleichzeitig gewandelt (d.h. digitalisiert), wobei während des zweiten Zeitintervalls das Referenzspannungssignal und das Bildspannungssignal eines dritten Pixels in die zweite Speichereinheit eingelesen werden. Folglich kann jeweils ein Pixel ausgelesen bzw. dessen analoge Signale können erzeugt werden, während in dem gleichen Zeitintervall die analogen Signale eines weiteren Pixels, welches bereits ausgelesen wurde, gewandelt werden. Insbesondere kann dies die zum Auslesen des Bildsensors benötigte Zeit verringern.

Ferner sind das erste, das zweite und das dritte Pixel gemäß einer ersten Realisierung der Erfindung derselben Spalte zugeordnet, wobei das erste und das zweite Pixel verschiedenen Spaltenleitungen zugeordnet sind. Gemäß einer zweiten Realisierung der Erfindung sind das erste und das zweite Pixel verschiedenen Spalten zugeordnet. Das zweite und das dritte Pixel können dabei insbesondere derselben Spalte zugeordnet sein. Ein Paar von Analog-Digital-Wandlern kann somit einer Spalte und einer Spaltenleitung; einer Spalte und mehreren Spaltenleitungen; oder mehreren Spalten und mehreren Spaltenleitungen zugeordnet sein.

Es kann bei einigen Ausführungsformen vorgesehen sein, dass während des ersten Zeitintervalls das Referenzspannungssignal und das Bildspannungssignal eines vierten Pixels in eine dritte Speichereinheit eingelesen werden und das in einer vierten Speichereinheit gehaltene Referenzspannungssignal eines fünften Pixels an den Signaleingang des ersten Analog-Digital-Wandlers und das in der vierten Speichereinheit gehaltene Bildspannungssignal des fünften Pixels an den Signaleingang des zweiten Analog-Digital-Wandlers angelegt und dort gleichzeitig gewandelt (d.h. digitalisiert) werden. Ferner können während des zweiten Zeitintervalls das Referenzspannungssignal und das Bildspannungssignal des vierten Pixels an den Signaleingang des ersten Analog-Digital-Wandlers und den Signaleingang des zweiten Analog-Digital-Wandlers angelegt und dort gleichzeitig gewandelt (d.h. digitalisiert) werden und das Referenzspannungssignal und das Bildspannungssignal eines sechsten Pixels kann in die vierte Speichereinheit eingelesen werden.

Es kann somit vorgesehen sein, dass während des ersten Zeitintervalls Referenzspannungssignale und Bildspannungssignale eines ersten Pixels und eines vierten Pixels in jeweilige Speichereinheiten eingelesen werden, während zuvor gebildete Referenzspannungssignale und Bildspannungssignale eines zweiten Pixels und eines fünften Pixels gewandelt werden. Die zum Einlesen eines Referenzspannungssignals und eines Bildspannungssignals benötigte Zeit kann somit dazu benutzt werden, zwei Digitalisierungsprozesse durchzuführen und nacheinander jeweilige Speichereinheiten mit den Analog-Digital-Wandlern zu verbinden. Ebenso können in dem folgenden zweiten Zeitintervall die während des ersten Zeitintervalls in die Speichereinheiten eingelesenen analogen Signale des ersten Pixels und des vierten Pixels nacheinander gewandelt werden, während analoge Signale weiterer zwei Pixel, des dritten Pixels und des sechsten Pixels, in die jeweiligen zuvor ausgelesenen Speichereinheiten eingelesen werden. Dabei können beispielsweise die erste Speichereinheit und die zweite Speichereinheit einer gemeinsamen Spalte von Pixeln zugeordnet und die dritte Speichereinheit und die vierte Speichereinheit einer anderen gemeinsamen Spalte zugeordnet sein, sodass während eines jeweiligen Zeitintervalls Referenzspannungssignale und Bildspannungssignale von Pixeln zweier Spalten sowohl gewandelt als auch eingelesen werden können.

Die Erfindung wird im Folgenden rein beispielhaft anhand von Ausführungsformen unter Bezugnahme auf die Zeichnungen erläutert.

Abbildungen Fig. 1A, 1B, 2-4, 5A und 6-8 entsprechen nicht der beanspruchten Erfindung und dienen nur der Veranschaulichung.

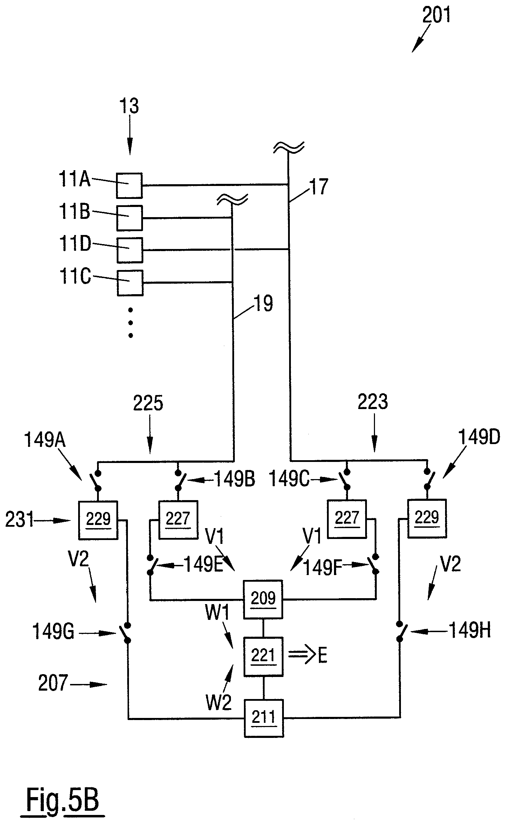

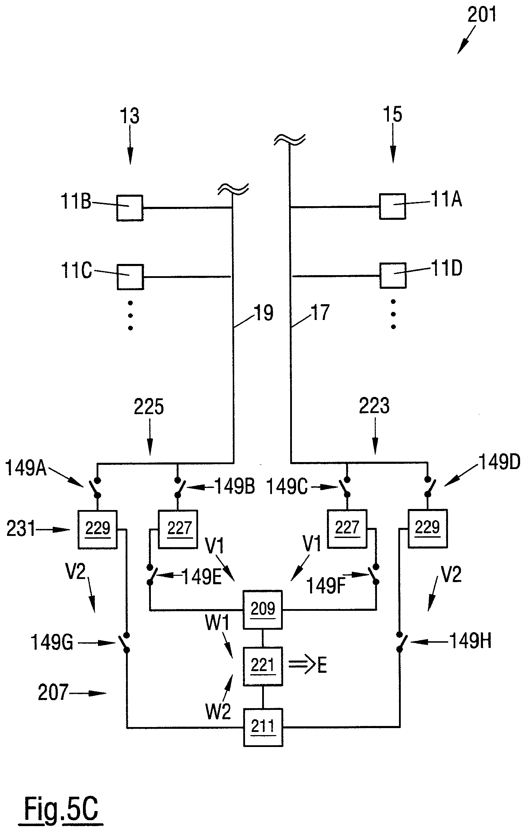

Abbildungen Fig. 5B und 5C entsprechen der beanspruchten Erfindung. Es zeigen:
- Fig. 1A und 1B: eine jeweilige schematische Darstellung von aus dem Stand der Technik bekannten Bildsensoren mit durchgehenden bzw. in der Mitte geteilten Spaltenleitungen,
- Fig. 2: einen Vier-Transistor-CMOS-Bildsensor gemäß dem Stand der Technik, wobei von dem Bildsensor lediglich ein Pixel und eine der Spaltenleitung des Pixels zugeordnete Spaltenausleseschaltung dargestellt sind,
- Fig. 3: eine schematische Darstellung eines Bildwandlers mit einem Vier-Transistor-CMOS-Bildsensor und mit einer Wandlereinheit zum gleichzeitigen Digitalisieren eines analogen Referenzspannungssignals und eines analogen Bildspannungssignals,
- Fig. 4: eine schematische Darstellung der Wandlereinheit mit einem ersten Analog-Digital-Wandler und einem zweiten Analog-Digital-Wandler,
- Fig. 5A - 5C: jeweilige schematische Darstellungen eines Bildwandlers mit einem Bildsensor und mit zwei Speichereinheiten, die zwei jeweilige Speicher zum Halten von Referenzspannungssignalen und Bildspannungssignalen jeweiliger zugeordneter Pixel aufweisen,
- Fig. 6: eine schematische Darstellung zur Veranschaulichung des zeitlichen Ablaufs des Auslesens des Bildsensors,
- Fig. 7: eine schematische Darstellung eines Bildwandlers mit einem Bildsensor und mit vier Speichereinheiten, die zwei jeweilige Speichern zum Halten von Referenzspannungssignalen und Bildspannungssignalen jeweiliger zugeordneter Pixel aufweisen, und
- Fig. 8: eine schematische Darstellung zur Veranschaulichung des zeitlichen Ablaufs des Auslesens des Bildsensors.

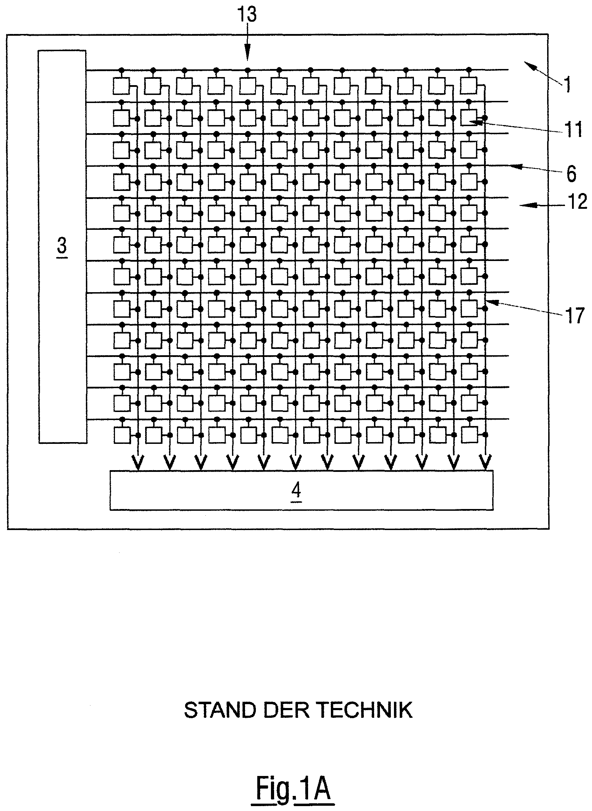

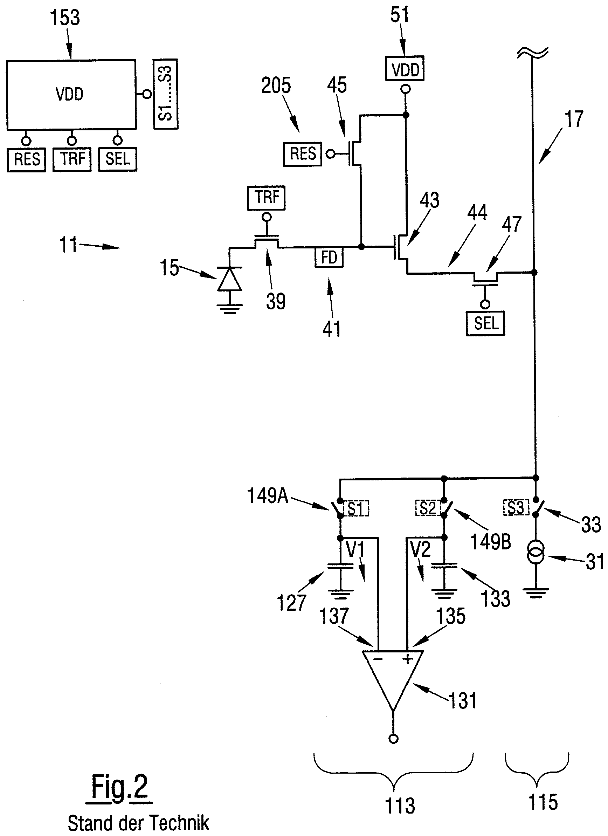

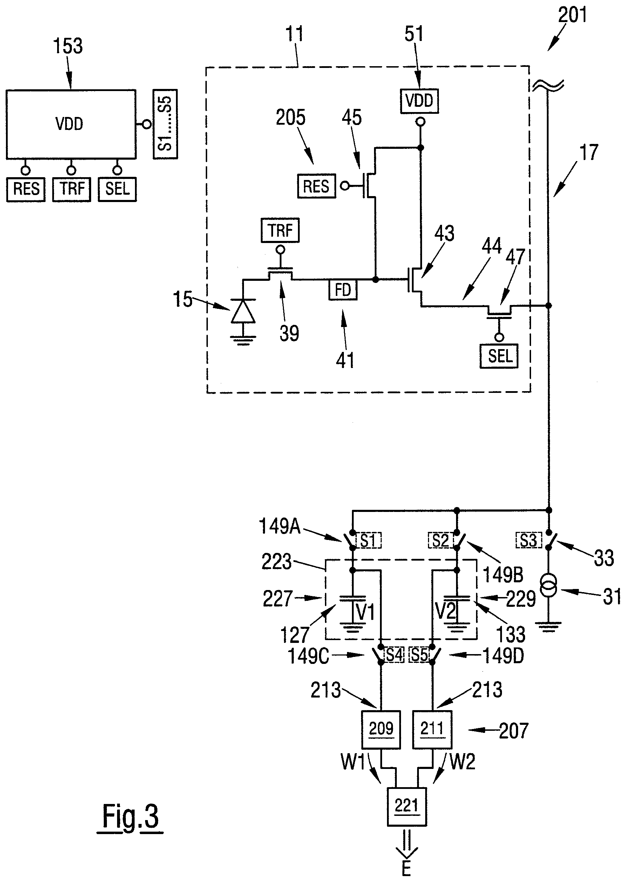

Fig. 1A zeigt beispielhaft einen Bildsensor 1 für eine elektronische Kamera, insbesondere für eine elektronische Bewegtbildkamera. Dieser Bildsensor 1 weist eine Vielzahl von in Zeilen 12 und Spalten 13 angeordneten Pixeln 11 auf, wobei jedes Pixel 11 ein lichtempfindliches Detektorelement 15 aufweist, um während einer Belichtung auftreffendes Licht in die elektrische Ladung umzuwandeln (vgl. Fig. 2 und 3).

Das Auslesen eines solchen Bildsensors 1 kann beispielsweise zeilenweise erfolgen, wozu eine Zeilenaddressierlogik 3 vorgesehen ist. Die Pixel 11 einer Zeile 12 können dazu über eine Zeilenauswahlleitung 6 mit einer jeweiligen Spaltenleitung 17 gekoppelt werden, welche den in einer Spalte 13 angeordneten Pixeln 11 zugeordnet ist. Über die Spaltenleitungen 17 können die Signale der Pixel 11 einer Zeile 12 an einen Spaltenverstärker 4 übermittelt werden, mittels dessen die erzeugten Signale verstärkt und daraufhin weiterverarbeitet, insbesondere digitalisiert, werden können.

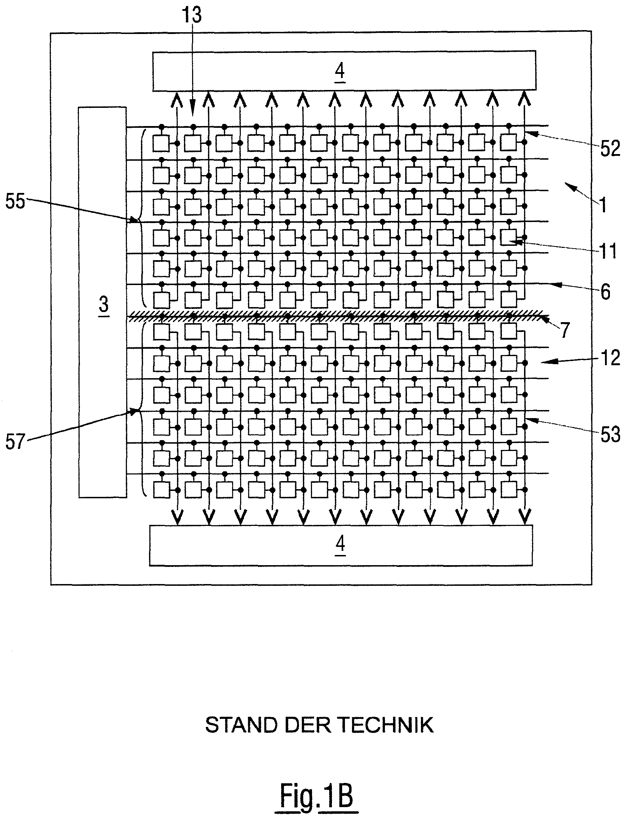

Fig. 1B zeigt einen ähnlichen Bildsensor 1, wobei die Pixel 11 in jeder Spalte 13 in einen oberen Block 55 und einen unteren Block 57 unterteilt sind und wobei für die Pixel 11 des oberen Blocks 55 eine obere Spaltenleitung 52 und für die Pixel 11 des unteren Blocks 57 eine untere Spaltenleitung 53 vorgesehen ist, über welche die jeweiligen Signale der Pixel 11 zu zwei Spaltenverstärkern 4 geleitet werden können. Ein solches Zuordnen von zwei Spaltenleitungen 52 und 53 zu Pixeln 11 einer Spalte 13 kann insbesondere das Auslesen des Bildsensors 1 beschleunigen, indem zwei Zeilen 12 von Pixeln 11 gleichzeitig ausgelesen werden können. Ferner kann es auch vorgesehen sein, dass Pixeln 11 einer Spalte 13 mehrere, beispielsweise zwei, drei, vier oder acht, Spaltenleitungen 17 zugeordnet sind, wobei einige oder sämtliche dieser mehreren Spaltenleitungen 17 parallel zueinander und in dieselbe Richtung verlaufen können, um die Signale mehrerer Pixel 11 einer Spalte 13 gleichzeitig an einen gemeinsamen Spaltenverstärker 4 übermitteln zu können.

Die grundlegende Funktionsweise eines beispielhaften herkömmlichen Vier-Transistor-Bildsensors 1 des APS-Typs (aktiver Pixelsensor) wird zum besseren Verständnis der Erfindung nachfolgend mit Bezug auf Fig. 2 erläutert, wobei einzelne Komponenten dieses Bildsensors 1 auch bei einem erfindungsgemäßen Bildwandler 201, der einen Bildsensor 1 aufweist, vorhanden sind (vgl. Fig. 3). Grundsätzlich ist die vorliegende Erfindung jedoch nicht auf Bildwandler 201 mit aktiven Vier-Transistor-Bildsensoren 1 beschränkt, sondern kann auch bei Bildwandlern 201 mit Bildsensoren 1 zum Einsatz gelangen, die weniger oder mehr als vier Transistoren je Pixel 11 aufweisen.

In Fig. 2 ist stellvertretend lediglich ein einziges Pixel 11 dargestellt, welches ein lichtempfindliches Detektorelement 15 in Form einer Photodiode umfasst, insbesondere einer sogenannten Pinned-Diode. Das lichtempfindliche Detektorelement 15 kann über einen Schalter in Form eines Transfer-Gates 39 wahlweise mit einem Ausleseknoten 41, der insbesondere als eine sogenannte Floating Diffusion (FD) ausgebildet ist, ladungsgekoppelt werden.

Der Ausleseknoten 41 ist mit dem Gate-Anschluss eines als Source-Folger ausgebildeten Wandler-Transistors 43 verbunden, der durch einen Feldeffekttransistor (FET) gebildet ist und eine Ladungs-Spannungs-Wandlerschaltung darstellt. Ferner ist der Ausleseknoten 41 über eine weitere Schalteinrichtung in Form eines Rücksetz-Schalters 45 mit einer (beispielsweise positiven) Spannungsversorgung 51 verbunden. Der Rücksetz-Schalter 45 und die Spannungsversorgung 51 sind dabei Teil einer Rücksetzeinrichtung 205, um in dem Ausleseknoten 41 gespeicherte Ladung löschen und den Ausleseknoten 41 auf einen Referenzwert zurücksetzen zu können. Einer der beiden Kanalanschlüsse (Drain-Anschluss) des Wandler-Transistors 43 ist ebenfalls mit der positiven Spannungsversorgung 51 verbunden, wohingegen der andere der beiden Kanalanschlüsse (Source-Anschluss) des Wandler-Transistors 43 einen Signalausgang 44 bildet, an dem ein Spannungssignal ausgegeben wird und der über eine Ausgangsleitung mit einem Auswahl-Schalter 47 verbunden ist. Der Auswahl-Schalter 47 fungiert als Zeilenauswahlschalter, wobei durch Aktivieren bzw. Schließen des Auswahl-Schalters 47 der Signalausgang 44 des Wandler-Transistors 43 wahlweise mit einer dem dargestellten Pixel 11 zugeordneten Ausleseleitung in Form einer Spaltenleitung 17 gekoppelt werden kann.

Die Spaltenleitung 17 ist dafür vorgesehen, die in einer zugehörigen Spalte 13 angeordneten gleichartigen Pixel 11 mit einer gemeinsamen Spaltenausleseschaltung 113, beispielsweise einer Spaltenverstärkerschaltung, zu verbinden. Dies geschieht alternierend durch temporäres Schließen des jeweiligen Auswahl-Schalters 47 der Pixel 11.

Die Spaltenausleseschaltung 113 umfasst einen ersten Kondensator oder Referenzwert-Kondensator 127, der mit einem Anschluss gegen Masse geschaltet und mit dem anderen Anschluss über einen Schalter 149A wahlweise mit der Spaltenleitung 17 koppelbar ist. Die Spaltenausleseschaltung 113 umfasst ferner einen zweiten Kondensator oder Signalwert-Kondensator 133, der mit einem Anschluss ebenfalls gegen Masse geschaltet und mit dem anderen Anschluss über einen weiteren Schalter 149B ebenfalls wahlweise mit der Spaltenleitung 17 koppelbar ist. Ferner umfasst die Spaltenausleseschaltung 113 einen Verstärker 131, an dessen negativem Eingang 137 die an dem ersten Kondensator 127 anliegende Spannung und an dessen positivem Eingang 135 die an dem zweiten Kondensator 133 anliegende Spannung angelegt wird.

Das Transfer-Gate 39 des jeweiligen Pixels 11 ist über eine Steuerleitung TRF, der Rücksetz-Schalter 45 ist über eine Steuerleitung RES, der Auswahl-Schalter 47 ist über eine Steuerleitung SEL, der Schalter 149A ist über eine Steuerleitung S1, und der Schalter 149B ist über eine Steuerleitung S2 von einer gemeinsamen Steuereinrichtung 153 steuerbar.

Der Spaltenleitung 17 ist ferner außerhalb des Pixelfelds des Bildsensors 1 (unterer Teil von Fig. 2) eine Vorladeschaltung 115 zugeordnet, welche eine Stromquelle 31 umfasst, die mittels eines Trennschalters 33 mit der Spaltenleitung 17 wahlweise koppelbar ist. Die Ansteuerung des Trennschalters 33 erfolgt durch die gemeinsame Steuereinrichtung 153 über eine Steuerleitung S3.

Nachfolgend wird das Funktionsprinzip eines derartigen Pixels 11 exemplarisch, basierend auf einer 3,3 V-CMOS-Technologie, beschrieben. Dieses Verfahren wird auch als "Correlated Double Sampling" (CDS) bezeichnet, wobei nachfolgend ein CDS auf analoger Ebene beschrieben wird. Typischerweise können alle Pixel 11 in einer Zeile auf die gleiche Weise und insbesondere parallel ausgelesen werden, so dass es für die Beschreibung des Auslesevorgangs ausreicht, nur diejenigen Pixel 11 zu betrachten, die mit derselben Spaltenleitung 17 verbunden sind.

Zunächst wird das während eines Belichtungsvorgangs einfallende Licht von dem lichtempfindlichen Element 15 in elektrische Ladung umgewandelt, sodass sich das lichtempfindliche Element 15 mit Elektronen füllt. Während des Belichtungsvorgangs werden die Steuerleitungen TRF, RES und SEL jeweils auf 0 V gehalten, d.h. die hierdurch angesteuerten Schalter 39, 45, 47 sind geöffnet.

Vor dem eigentlichen Auslesen wird in einem Vorlade-Schritt (Pre-Charge) der Trennschalter 33 zunächst geschlossen und sodann, nachdem die Spaltenleitung 17 auf ein definiertes Referenzpotential (hier: Massepotential) gesetzt worden ist, wieder geöffnet. Parallel hierzu wird an die Steuerleitung RES kurzzeitig eine Spannung von 3,3 V angelegt, um durch Leckströme und/oder Streulicht gebildete Ladung aus dem Ausleseknoten 41 zu entfernen, d.h. um den Ausleseknoten 41 zu löschen. Der Ausleseknoten 41 wird also mittels der Rücksetzeinrichtung 205 auf einen durch die Spannungsversorgung 51 definierten Referenzwert gesetzt. An dem Signalausgang 44 des Wandler-Transistors 43 stellt sich somit eine Spannung ein, die der Ladung an dem gelöschten Ausleseknoten 41 entspricht.

In einem nächsten Schritt (Lesen eines Referenzwerts) wird an die Steuerleitung SEL eine Spannung von 3,3 V angelegt, sodass der Auswahl-Schalter 47 geschlossen wird. Zusätzlich wird der Schalter 149A geschlossen. Hierdurch wird ein der Ladung im Ausleseknoten 41 bzw. dem Referenzwert entsprechendes Referenzspannungssignal V1 bzw. der entsprechende Spannungswert des Wandler-Transistors 43 über den Auswahl-Schalter 47 auf die Spaltenleitung 17 geschaltet und somit zum Kondensator 127 übertragen. Nachdem das System eingeschwungen ist, wird der Auswahl-Schalter 47 durch ein entsprechendes Steuersignal wieder geöffnet und gleichzeitig wird der Kondensator 127 durch Öffnen des Schalters 149A wieder von der Spaltenleitung 17 getrennt, so dass das Referenzspannungssignal V1 an dem Kondensator 127 anliegt.

Anschließend wird in einem weiteren Vorlade-Schritt durch kurzzeitiges Schließen des Trennschalters 33 die Spaltenleitung 17 erneut auf das definierte Referenzpotential vorgeladen. Parallel hierzu wird an die Steuerleitung TRF kurzzeitig eine Spannung von 3,3 V angelegt, um das Transfer-Gate 39 kurzzeitig zu öffnen bzw. den hierdurch gebildeten Schalter zu schließen, sodass die belichtungsabhängig erzeugten Elektronen von dem lichtempfindlichen Detektorelement 15 zu dem Ausleseknoten 41 fließen können (Transfer-Schritt).

In einem nächsten Schritt (Lesen eines Signalwerts) werden der Auswahl-Schalter 47 und der Schalter 149B geschlossen. Hierdurch wird ein der erzeugten Ladung im Ausleseknoten 41 entsprechendes Bildspannungssignal V2 bzw. der entsprechende Spannungswert des Wandler-Transistors 43 über den Auswahl-Schalter 47 auf die Spaltenleitung 17 geschaltet und somit zum Kondensator 133 übertragen. Nachdem das System eingeschwungen ist, wird der Kondensator 133 durch Öffnen des Schalters 149B wieder von der Spaltenleitung 17 getrennt. Durch Anlegen von 0 V an die Steuerleitung SEL wird auch der Auswahl-Schalter 47 geöffnet und das Pixel 11 von der Spaltenleitung 17 getrennt.

Am Ausgang des Verstärkers 131 liegt nun eine Spannung an, die der Differenz der in den Kondensatoren 127, 133 gespeicherten Spannungswerte und damit der in dem lichtempfindlichen Detektorelement 15 erzeugten Ladungsmenge entspricht.

Schließlich kann in noch einem weiteren Schritt eine Spannung von 3,3 V kurzzeitig an die Steuerleitungen RES und TRF angelegt werden, um die Ladung aus dem Ausleseknoten 41 und eventuelle Restladung aus dem lichtempfindlichen Detektorelement 15 zu entfernen, damit der nächste Belichtungsvorgang wieder mit einem völlig "leeren" Pixel 11 beginnen kann.

Diese Schritte werden auch für die weiteren, mit der jeweiligen Spaltenleitung 17 verbundenen Pixel 11 durchgeführt.

Indem somit zunächst in dem Ausleseknoten 41 befindliche Ladung entfernt und der Ausleseknoten 41 auf einen Referenzwert zurückgesetzt wird, kann das zu diesem Referenzwert proportionale Referenzspannungssignal V1 an den Kondensator 127 angelegt werden, woraufhin das der an dem Detektorelement 15 erzeugten Ladung proportionale Bildspannungssignal V2 an dem Kondensator 133 gebildet wird. Durch Abziehen des Referenzspannungssignals V1 von dem Bildspannungssignal V2 bzw. Anlegen der Differenzspannung an den Verstärker 131 kann ein etwaiges Rauschen des Pixels 11 bzw. des Bildsensors 1 ausgeglichen werden, so dass die Differenzspannung als das letztlich auszugebende analoge Signal möglichst exakt proportional zu der tatsächlich an dem Detektorelement 15 erzeugten Ladung ist. Das mittels des Verstärkers 131 verstärkte Signal kann daraufhin beispielsweise an einen in Fig. 2 nicht gezeigten Analog-Digital-Wandler angelegt werden, um das analoge Signal bzw. die durch dieses analoge Correlated Double Sampling erzeugte Differenzspannung zu digitalisieren.

Hierbei besteht jedoch die Problematik, dass auch während der Digitalisierung des Differenzsignals Fehler entstehen können, mit welchen der für das jeweilige Pixel 11 ermittelte digitalisierte Wert dementsprechend behaftet ist und welcher eine Abweichung von dem angestrebten, zu der tatsächlich in dem Detektorelement erzeugten Ladung möglichst exakt proportionalen digitalen Wert darstellt. Um dies näherungsweise auszugleichen, können zwar grundsätzlich dunkle bzw. signallose Zeilen vorgesehen und die dabei ermittelten analogen Signale digitalisiert werden, um den während des Digitalisierens entstehenden Fehler anhand eines Mittelwerts abschätzen zu können. Jedoch ist auch dieser Mittelwert insbesondere mit statistischen Fehlern behaftet und es ist eine Vielzahl dunkler Zeilen erforderlich, um den statistischen Fehler zumindest möglichst gering zu halten. Zudem können durch das Abziehen eines Mittelwerts keine Schwankungen der Fehler von gleichzeitig ausgelesenen Pixeln, beispielsweise Pixeln einer Zeile, berücksichtigt werden, sondern es muss für jedes Pixel derselbe gemittelte Fehler angenommen werden.

Um diesem Problem zu begegnen und einen Bildsensor 1 derart auslesen zu können, dass für jedes Pixel 11 ein der an dem Detektorelement 15 erzeugten Ladung möglichst exakt entsprechender digitaler Wert ausgegeben werden kann, bei welchem insbesondere etwaige durch das Digitalisieren entstehende Fehler minimiert sind, ist ein in Fig. 3 veranschaulichter Bildwandler 201 vorgesehen. In Fig. 3 ist dieser Bildwandler 201 schematisch mit einem stellvertretenden Pixel 11 gezeigt, welches Teil eines Bildsensors 1 mit einer Vielzahl von Pixeln 11 ist, insbesondere eines CMOS-Bildsensors (vgl. Fig. 1A und 1B). Die Pixel 11 bzw. das gezeigte Pixel 11 des Bildsensors 1 des Bildwandlers 201 sind dabei wie vorstehend in Bezug auf Fig. 2 beschriebenen ausgebildet, wobei grundsätzlich auch eine abweichende Ausbildung der Pixel 11 vorgesehen sein kann. Beispielsweise sind einfachere Ausbildungen der Pixel 11 oder Pixel 11 mit einem zusätzlichen Transistor, insbesondere einem Überlauf-Kondensator, möglich.

Um das über die Spaltenleitung 17 ausgegebene Referenzspannungssignal V1 und das Bildspannungssignal V2 digitalisieren zu können, weist der Bildwandler 201 eine Wandlereinheit 207 mit einem ersten Analog-Digital-Wandler 209 und einem zweiten Analog-Digital-Wandler 211 auf. Dabei kann das von dem Kondensator 127 gehaltene Referenzspannungssignal V1 durch Schließen eines Schalters 149C, welcher über eine Steuerleitung S4 mittels der Steuereinrichtung 153 angesteuert werden kann, an einen Signaleingang 213 des ersten Analog-Digital-Wandlers 209 angelegt werden. Ebenso kann das an dem Kondensator 133 anliegende Bildspannungssignal V2 durch Schließen eines Schalters 149D über eine Steuerleitung S5 an einen Signaleingang 213 des zweiten Analog-Digital-Wandlers 211 angelegt werden.

Die Steuereinrichtung 153 kann dabei dazu ausgebildet sein, die Schalter 149C und 149D gleichzeitig zu schließen und dadurch das Referenzspannungssignal V1 und das Bildspannungssignal V2 gleichzeitig an die jeweiligen Signaleingänge 213 der Analog-Digital-Wandler 209 und 211 anzulegen. Dazu bildet insbesondere der Kondensator 127 einen ersten Speicher 227, um das über die Spaltenleitung 17 ausgegebene Referenzspannungssignal V1 zu halten, während das Bildspannungssignal V2 gebildet bzw. das Detektorelement 15 ausgelesen wird. Auch der Kondensator 133 kann einen zweiten Speicher 229 bilden, um das Bildspannungssignal V2 insbesondere kurzfristig zu halten, bevor diese beiden analogen Signale V1 und V2 an die jeweiligen Analog-Digital-Wandler 209 und 211 angelegt werden. Dabei können der erste Speicher 227 und der zweite Speicher 229 eine erste Speichereinheit 223 des Bildwandlers 201 bilden. Grundsätzlich kann es jedoch auch vorgesehen sein, das Bildspannungssignal V2 direkt auf den Signaleingang 213 des zweiten Analog-Digital-Wandlers 211 zu leiten.

Indem das Bildspannungssignal V2 und das zugehörige Referenzspannungssignal V1 gleichzeitig an die jeweiligen Analog-Digital-Wandler 209 und 211 angelegt werden, kann das Referenzspannungssignal V1 mittels des ersten Analog-Digital-Wandlers 209 in einen digitalen Referenzsignalwert W1 und gleichzeitig das Bildspannungssignal V2 mittels des zweiten Analog-Digital-Wandlers 211 in einen digitalen Bildsignalwert W2 gewandelt werden. Dabei können die beiden Analog-Digital-Wandler 209 und 211 synchronisiert betrieben werden, so dass letztlich der Bildsignalwert W2 und der Referenzsignalwert W1 mit den gleichen durch den Digitalisierungsprozess bedingten Fehlern behaftet sein können.

Um letztlich einen der an dem Detektorelement 15 erzeugten Ladung entsprechenden digitalen Wert zu erhalten, weist der Bildwandler 201 eine Recheneinheit 221 auf, an welche der Referenzsignalwert W1 und der Bildsignalwert W2 übermittelt werden. Die Recheneinheit 221 ist dabei dazu ausgebildet, für jedes Pixel 11 des Bildsensors 1, hier exemplarisch das gezeigte Pixel 11, durch Subtrahieren des digitalen Referenzsignalwerts W1 von dem digitalen Bildsignalwert W2 als Ergebnis einen Pixelbildwert E zu bestimmen, welcher proportional zu der während der Belichtung an dem Detektorelement 15 des jeweiligen Pixels 11 erzeugten Ladung ist. Durch diese Subtraktion wird zum einen ein etwaiges Rauschen des Bildsensors 1 bzw. des Pixels 11, welches das Referenzspannungssignal V1 und das Bildspannungssignal V2 in gleicher Weise beeinflusst, berücksichtigt und in dem Pixelbildwert E ausgeglichen, während zum anderen auch die sich aufgrund des gleichzeitigen Wandelns des Referenzspannungssignals V1 und des Bildspannungssignals V2 in gleicher Weise auf den Referenzsignalwert W1 und den Bildsignalwert W2 auswirkenden Fehler des Digitalisierungsprozesses ausgeglichen werden können. Der Pixelbildwert E kann somit insbesondere frei von in dem Digitalisierungsprozess entstehenden Fehlern bzw. Unsicherheiten sein.

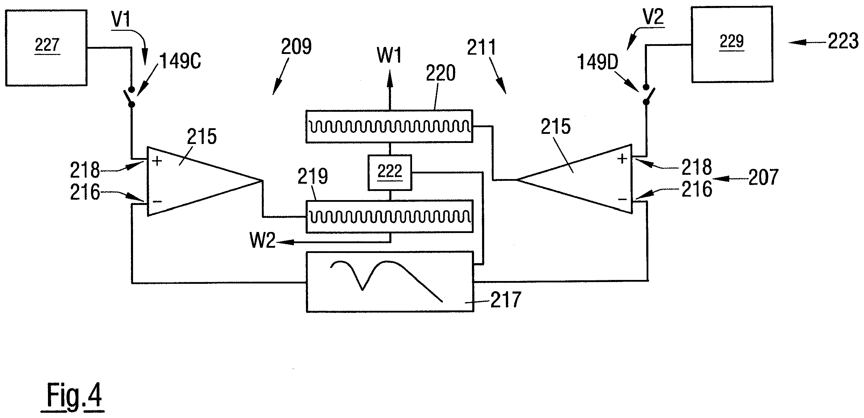

Fig. 4 zeigt eine schematische Ansicht der Wandlereinheit 207 zur Veranschaulichung einer Möglichkeit des synchronisierten Betriebs der beiden Analog-Digital-Wandler 209 und 211, um ein gleichzeitiges Wandeln des Referenzspannungssignals V1 und des Bildspannungssignals V2 erreichen zu können. Die Wandlereinheit 207 weist dabei einen Rampengenerator 217 auf, um eine gemeinsame Spannungsrampe für den ersten Analog-Digital-Wandler 209 und für den zweiten Analog-Digital-Wandler 211 zu generieren. Die Analog-Digital-Wandler 209 und 211 weisen dabei einen jeweiligen Komparator 215 mit einem ersten Eingang 216 und einem zweiten Eingang 218 auf, wobei die von dem Rampengenerator 217 generierte Spannungsrampe an den jeweiligen ersten Eingängen 216 der Komparatoren 215 anliegt. Die zweiten Eingänge 218 der Komparatoren 215 sind hingegen mit einem jeweiligen des ersten Speichers 227 und des zweiten Speichers 229 verbunden, sodass das Referenzspannungssignal V1 durch Schließen des Schalters 149C an den zweiten Eingang 218 des Komparators 215 des ersten Analog-Digital-Wandlers 209 und das Bildspannungssignal V2 durch Schließen des Schalters 149D an den zweiten Eingang 218 des Komparators 215 des zweiten Analog-Digital-Wandlers 211 angelegt werden kann.

Die Wandlereinheit 207 weist ferner einen ersten Taktzähler 219 für den ersten Analog-Digital-Wandler 209 und einen zweiten Taktzähler 220 für den zweiten Analog-Digital-Wandler 211 auf. Beide Taktzähler 219 und 220 sind mit einem gemeinsamen Taktgenerator 222 verbunden, welcher insbesondere dazu ausgebildet ist, ein gemeinsames Startsignal für den ersten Taktzähler 219 und den zweiten Taktzähler 220 zu generieren, um die Taktzähler 219 und 220 zeitgleich starten zu können. Um den Referenzsignalwert W1 und den Bildsignalwert W2 anhand des Referenzspannungssignals V1 bzw. des Bildspannungssignals V2 zu ermitteln, können die jeweiligen Taktzähler 219 und 220 gestoppt werden, sobald die von dem Rampengenerator 217 generierte Spannungsrampe das an dem jeweiligen Analog-Digital-Wandler 209 bzw. 211 anliegende Spannungssignal V1 bzw. V2 erreicht. Der Anzahl an Taktschritten, welche der jeweilige Taktzähler 219 bzw. 220 zwischen dem Startsignal und dem Stopp durchführt, kann sodann ein jeweiliger digitaler Wert zugeordnet werden. Dieser Wert kann von dem ersten Taktzähler 219 als Referenzsignalwert W1 bzw. von dem einen zweiten Taktzähler 220 als Bildsignalwert W2 ausgegeben werden (Signalausgänge in Fig. 4 nicht gezeigt). Indem die Taktzähler 219 und 220 dabei durch ein gemeinsames Startsignal und somit gleichzeitig gestartet werden können, kann ein relativer Fehler zwischen der Anzahl der Taktschritte der Taktzähler 219 und 220 aufgrund eines unterschiedlichen Startzeitpunkts verhindert werden. Insbesondere ein Jitter des Startzeitpunkts kann sich dabei in gleicher Weise als Fehler auf den digitalen Referenzsignalwert W1 und den digitalen Bildsignalwert W2 auswirken, der durch die nachfolgende Subtraktion dieser Werte ausgeglichen werden kann. Zudem ist der Taktgenerator 222 auch mit dem Rampengenerator 217 verbunden, so dass das an die Taktzähler 219 und 220 übermittelte Startsignal auch an den Rampengenerator 217 gesandt werden kann, um das Generieren der Spannungsrampe ebenfalls zeitgleich mit den Taktzählern 219 und 220 zu starten.

Ferner kann der Taktgenerator 222 als gemeinsame Clock für den ersten Taktzähler 219 und den zweiten Taktzähler 220 fungieren, um die Taktzähler 219 und 220 nach dem Starten mit einem synchronisierten Takt betreiben zu können. Auch das Entstehen eines relativen Fehlers zwischen dem Referenzsignalwert W1 und dem Bildsignalwert W2 aufgrund unterschiedlich schnell laufender Taktzähler 219 und 220 kann somit verhindert werden. Insbesondere kann der Digitalisierungsprozess zum Ermitteln des Referenzsignalwerts W1 und des Bildsignalwerts W2 somit vollständig synchronisiert erfolgen, so dass sich etwaige Fehler in gleicher Weise auf die beiden digitalisierten Werte auswirken und durch die nachfolgende Subtraktion des Referenzsignalwerts W1 von dem Bildsignalwert W2 ausgeglichen werden können. Auch ein durch einen Offset der Spannungsrampe erzeugter Fehler wirkt sich aufgrund des vollständig synchronisierten Betriebs der Analog-Digital-Wandler 209 und 211 in gleicher Weise auf den Referenzsignalwert W1 und den Bildsignalwert W2 aus, so dass dieser Fehler durch nachfolgendes Subtrahieren des digitalen Referenzsignalwerts W1 von dem digitalen Bildsignalwert W2 im Zuge dieses digitale Correlated Double Sampling ebenfalls eliminiert werden kann.

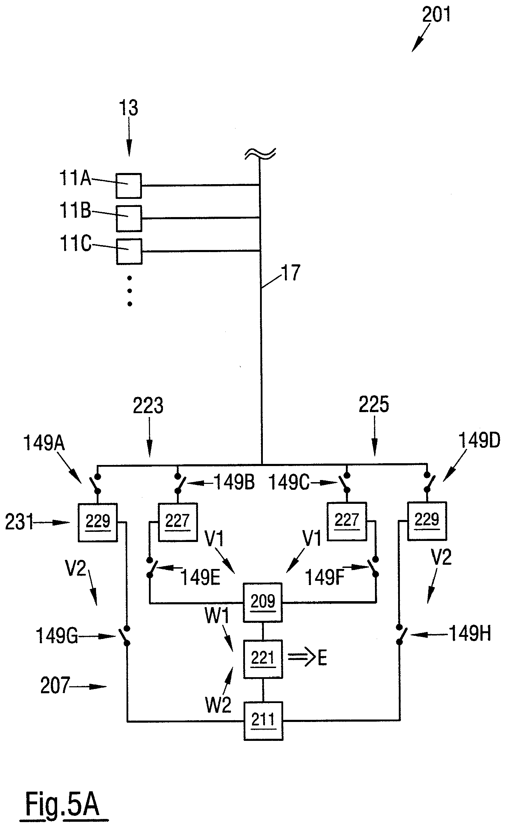

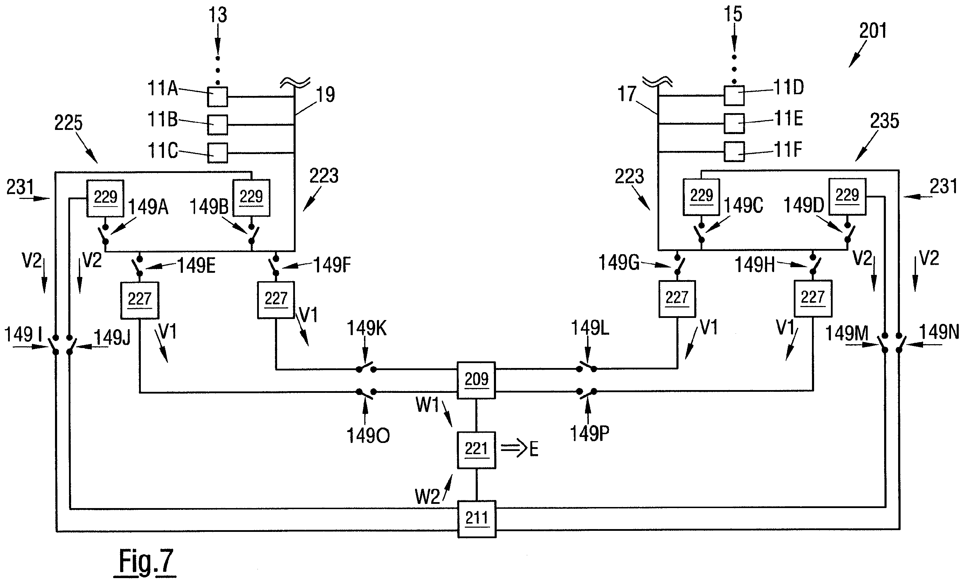

Während es ein solches gleichzeitiges Digitalisieren des Referenzspannungssignals V1 und des Bildspannungssignals V2 somit ermöglicht, durch das Digitalisieren verursachte Fehler bzw. Unsicherheiten zu beseitigen, sind die Analog-Digital-Wandler 209 und 211 während eines Auslesens des Referenzspannungssignals V1 und des Bildspannungssignals V2 eines jeweiligen Pixels 11 grundsätzlich ungenutzt. Dies bietet die Möglichkeit, Referenzspannungssignale V1 und Bildspannungssignale V2 weiterer Pixel 11 währenddessen zu digitalisieren und dadurch die Auslesezeit zum Auslesen des Bildsensors 1 zu verringern, wie im Folgenden anhand der Figuren 5A bis 8 erläutert wird. In diesen schematischen Darstellungen können insbesondere die gezeigten Pixel 11A bis 11F grundsätzlich in der gleichen Art wie die in den Figuren 2 und 3 veranschaulichten Pixel 11 aufgebaut sein und insbesondere über jeweilige Auswahlschalter 47 mit einer zugeordneten Spaltenleitung 17 oder 19 verbindbar sein. Die schematisch dargestellten Speicher 227 und 229 können, wie ebenfalls in den Figuren 2 und 3 gezeigt, insbesondere als Kondensatoren ausgebildet sein, um die Referenzspannungssignale V1 und Bildspannungssignale V2 der jeweiligen Pixel 11 zu halten. Zudem können die gezeigten Schalter 149A bis 149P grundsätzlich mittels jeweiliger, in den Figuren 5A bis 5C und 7 nicht gezeigter Steuerleitungen mittels der Steuereinrichtung 153 ansteuerbar sein.

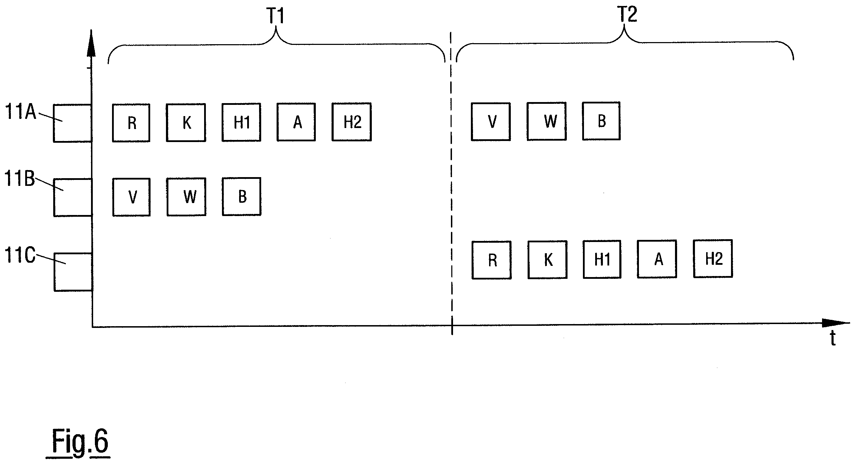

Fig. 5A zeigt ein erstes Pixel 11A, ein zweites Pixel 11B und ein drittes Pixel 11C, welche in einer Spalte 13 angeordnet und einer gemeinsamen Spaltenleitung 17 zugeordnet sind. Im Unterschied zu Fig. 3 ist hierbei zusätzlich zu der ersten Speichereinheit 223 mit dem ersten Speicher 227 und dem zweiten Speicher 229 eine zweite Speichereinheit 225 ausgebildet, die ebenfalls einen ersten Speicher 227 und einen zweiten Speicher 229 aufweist. Die erste Speichereinheit 223 und die zweite Speichereinheit 225 bilden dabei ein Paar 231 von Speichereinheiten 223 und 225. Wie Fig. 6 veranschaulicht, ermöglicht diese Ausbildung des Bildwandlers 201 mit zwei Speichereinheiten 223 und 225 ein beschleunigtes Auslesen des Bildsensors 1, indem die zum Auslesen bzw. Bilden des Referenzspannungssignals V1 und des Bildspannungssignals V2 eines Pixels 11 benötigte Zeit genutzt wird, um mittels der Analog-Digital-Wandler 209 und 211 gleichzeitig jeweilige Referenzspannungssignale V1 und Bildspannungssignale V2 eines anderen Pixels 11 zu wandeln.

Dazu kann die Steuereinrichtung 153 dazu ausgebildet sein, während eines ersten Zeitintervalls T1 zunächst in einem Schritt R den Ausleseknoten 41 des ersten Pixels 11A mittels der Rücksetzeinrichtung 205 zurückzusetzen und den Ausleseknoten 41 in einem Schritt K mit der Spaltenleitung 17 und durch Schließen des Schalters 149B mit dem Speicher 227 der ersten Speichereinheit 223 zu koppeln. Das zugehörige und dadurch gebildete Referenzspannungssignal des Pixels 11A kann darauf in einem Schritt H1 von dem Speicher 227 gehalten werden, wozu der Schalter 149B nach Einschwingen des Systems wieder geöffnet werden kann. Daraufhin kann, weiterhin während des Zeitintervalls T1, das Detektorelement 15 des ersten Pixels 11A in einem Schritt A ausgelesen werden, indem das Pixel 11A mit der Spaltenleitung 17 und durch Schließen des Schalters 149A mit dem zweiten Speicher 229 der ersten Speichereinheit 223 gekoppelt wird. Im Schritt H2 wird das so gebildete Bildspannungssignal V2 an dem Speicher 229 gehalten, wozu der Schalter 149A wieder geöffnet werden kann.

Während dieses Bildens des Referenzspannungssignals V1 und des Bildspannungssignals V2 des ersten Pixels 11A werden, ebenfalls in dem ersten Zeitintervall T1, das Referenzspannungssignal V1 und das Bildspannungssignal V2 des zweiten Pixels 11B digitalisiert, die in einem vorhergehenden, nicht dargestellten Zeitintervall in die Speicher 227 und 229 der zweiten Speichereinheit 225 eingelesen worden sein können. Dazu wird, während des ersten Zeitintervalls T1, der erste Speicher 227 der zweiten Speichereinheit 225 durch Schließen des Schalters 149F mit dem ersten Analog-Digital-Wandler 209 und der zweite Speicher 229 der zweiten Speichereinheit 225 durch Schließen des Schalters 149H mit dem zweiten Analog-Digital-Wandler 211 verbunden (Schritt V). Daraufhin werden das Referenzspannungssignal V1 und das Bildspannungssignal V2 des zweiten Pixels 11B in einem Schritt W gleichzeitig gewandelt und in einem Schritt B wird durch Subtrahieren des ermittelten Referenzsignalwerts W1 von dem ermittelten Bildsignalwert W2 der dem zweiten Pixel 11B zugeordnete Pixelbildwert E berechnet.

In einem darauffolgenden Zeitintervall T2 werden die zuvor eingelesenen analogen Signale, das Referenzspannungssignal V1 und das Bildspannungssignal V2, des ersten Pixels 11A digitalisiert. Dazu werden der erste Speicher 227 der ersten Speichereinheit 223 durch Schließen des Schalters 149G mit dem ersten Analog-Digital-Wandler 209 und der zweite Speicher 229 der ersten Speichereinheit 223 durch Schließen des Schalters 149G mit dem zweiten Analog-Digital-Wandler 211 verbunden (Schritt V), die analogen Signale werden gewandelt (Schritt W) und schließlich wird der dem ersten Pixel 11A zugehörige Pixelbildwert E berechnet (Schritt B). Zusätzlich dazu werden während des zweiten Zeitintervalls T2 bereits das Referenzspannungssignal V1 und das Bildspannungssignal V2 des dritten Pixels 11C gebildet, indem dessen Ausleseknoten 41 nacheinander durch Schließen des Schalters 149C bzw. des Schalters 149D mit der Spaltenleitung 17 gekoppelt und das Referenzspannungssignal V1 in den Speicher 227 und das Bildspannungssignal V2 in den zweiten Speicher 229 der zweiten Speichereinheit 225 eingelesen werden (Schritte R, K, H1, A, H2, wie vorstehend erläutert).

Die zum Bilden jeweiliger analoger Signale V1 und V2 eines Pixels 11 benötigte Zeit kann somit dazu genutzt werden, bereits zuvor gebildete analoge Signale V1 und V2 eines weiteren Pixels 11 zu wandeln, so dass die zum Auslesen des Bildsensors 1 benötigte Zeit verkürzt werden kann. Dazu können die beiden Zeitintervalle T1 und T2 zyklisch wiederholt werden, um sukzessive die Pixel 11 der Spalte 13 über die gemeinsame Spaltenleitung 17 auszulesen. Grundsätzlich ist es jedoch auch möglich, dass weitere Zeitintervalle zwischengeschaltet sind und/oder weitere Aktionen in den Zeitintervallen T1 und T2 vorgenommen werden.

Während die Pixel 11A, 11B und 11C in dem Ausführungsbeispiel der Fig. 5A einer gemeinsamen Spalte 13 und einer gemeinsamen Spaltenleitung 17 zugeordnet sind, ist es auch möglich, die beiden Analog-Digital-Wandler 209 und 211 der Wandlereinheit 207 für Pixel 11 vorzusehen, die in einer gemeinsamen Spalte 13 angeordnet, jedoch verschiedenen Spaltenleitungen 17 und 19 zugeordnet sind. Dies ist in Fig. 5B veranschaulicht, wobei das erste Pixel 11A und ein viertes Pixel 11D einer ersten Spaltenleitung 17 zugeordnet sind, während das zweite Pixel 11B und das dritte Pixel 11C einer zweiten Spaltenleitung 19 zugeordnet sind. Die Spaltenleitung 17 ist dabei der ersten Speichereinheit 223 und die Spaltenleitung 19 der zweiten Speichereinheit 225 zugeordnet. Hierbei kann somit abwechselnd ein einer der Spaltenleitungen 17 oder 19 zugeordnetes Pixel 11 ausgelesen und dessen Referenzspannungssignal V1 und dessen Bildspannungssignal V2 gebildet werden, während in dem gleichen Zeitintervall T1 oder T2 zuvor gebildete Referenzspannungssignale V1 und Bildspannungssignale V2 eines der anderen Spaltenleitungen 19 oder 17 zugeordneten Pixels 11 gewandelt werden. Die Speichereinheiten 223 und 225 können dazu abwechselnd mit den Analog-Digital-Wandlern 209 und 211 bzw. der jeweiligen zugeordneten Spaltenleitung 17 oder 19 verbunden werden, so dass die beiden Spaltenleitungen 17 und 19 die Wandlereinheit 207 teilen. Dies ermöglicht es, die Zahl der Analog-Digital-Wandler 209 bzw. 211 pro Spaltenleitung 17 oder 19 zu begrenzen und gleichsam die Ausdehnung des Bildwandlers 201 sowie durch den Betrieb von Analog-Digital-Wandlern 209 und 211 entstehende Wärme, die zu einem Rauschen des Bildsensors 1 führen könnte, zu minimieren.

Ferner zeigt Fig. 5C ein Ausführungsbeispiel, bei welchem die Wandlereinheit 207 mit den Analog-Digital-Wandlern 209 und 211 Pixeln 11 zugeordnet ist, die in zwei verschiedenen Spalten 13 und 15 angeordnet sind. Dabei ist die erste Speichereinheit 223 einer ersten Spaltenleitung 17 und darüber in einer Spalte 15 angeordneten Pixeln 11 zugeordnet, während die zweite Speichereinheit 225 über eine zweite Spaltenleitung 19 in einer Spalte 13 angeordneten Pixeln 11 zugeordnet ist. Die Wandlereinheit 207 bzw. deren beiden Analog-Digital-Wandler 209 und 211 werden somit von zwei Spalten 13 und 15 geteilt und es können Referenzspannungssignale V1 und Bildspannungssignale V2 eines Pixels 11 der einen Spalte 13 oder 15 gewandelt bzw. digitalisiert werden, während ein Referenzspannungssignal V1 und ein Bildspannungssignal V2 eines Pixels 11 der anderen Spalte 15 oder 13 gebildet bzw. in die jeweilige Speichereinheit 223 oder 225 eingelesen werden.

Auch durch dieses Zuordnen der Wandlereinheit 207 zu Pixeln 11 von zwei Spalten 13 und 15 kann insbesondere die Anzahl an Analog-Digital-Wandlern 209 und 211 pro Spalte 13 und 15 bzw. pro Spaltenleitung 17 und 19 minimiert werden. Jedoch kann diese Beschränkung der Zahl der Analog-Digital-Wandler 209 und 211 pro Spalte 13 bzw. 15 zu einer verlängerten Auslesezeit des Bildsensors 1 führen, da während eines jeweiligen Zeitintervalls T1 oder T2 lediglich analoge Signale V1 und V2 eines Pixels 11 aus einer der Spalten 13 und 15 gewandelt werden können, während keine analogen Signale V1 und V2 von Pixeln 11 aus der anderen Spalte 15 oder 13 gewandelt werden.

Um die Auslesezeit trotz eines Zuordnens der Wandlereinheit 207 bzw. der beiden Analog-Digital-Wandler 209 und 211 zu zwei Spalten 13 und 15 bzw. zwei Spaltenleitungen 17 und 19 zu minimieren, sind in dem in Fig. 7 veranschaulichten Ausführungsbeispiel zwei weitere Speichereinheiten 233 und 235 zum Speichern jeweiliger Referenzspannungssignale V1 und Bildspannungssignale V2 vorgesehen. Die erste Speichereinheit 223 und die zweite Speichereinheit 225 sind dabei einer Spalte 13 zugeordnet, in welcher ein erstes Pixel 11A, ein zweites Pixel 11B und ein drittes Pixel 11C angeordnet sind, die wahlweise mit einer Spaltenleitung 19 verbindbar sind. Die dritte Speichereinheit 233 und die vierte Speichereinheit 235 sind hingegen einer Spalte 15 zugeordnet, in welcher ein viertes Pixel 11D, ein fünftes Pixel 11E und ein sechstens Pixel 11F angeordnet sind, welche über eine Spaltenleitung 17 wahlweise mit den Speichern 227 und 229 einer jeweiligen der dritten und der vierten Speichereinheit 233 und 235 verbindbar sind. Jeder Spaltenleitung 17 und 19 bzw. jeder Spalte 13 und 15 ist somit ein jeweiliges Paar 231 von Speichereinheiten 223 und 225 bzw. 233 und 235 zugeordnet.

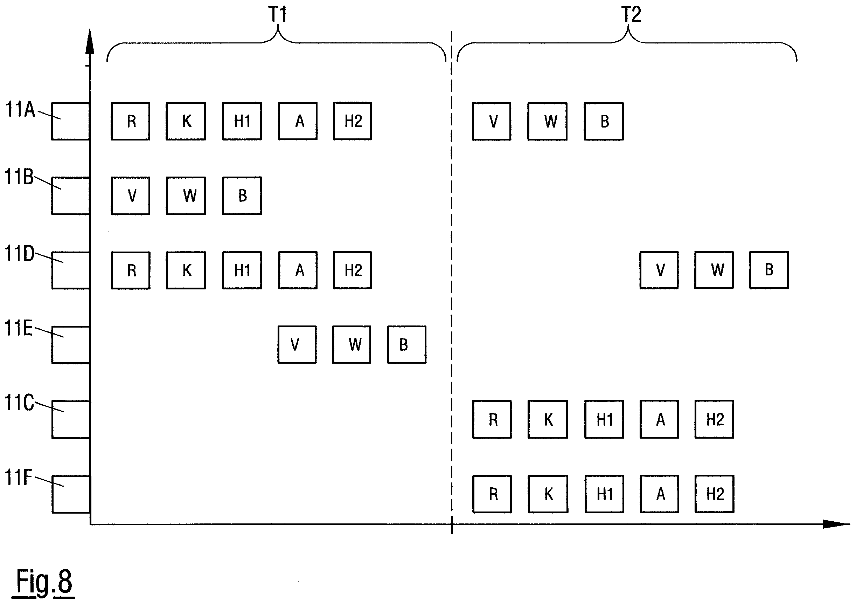

Eine Möglichkeit zum Auslesen eines solchen Bildsensors 1 mittels dieses Bildwandlers 201 mit einem Paar 231 von Speichereinheiten 223 und 225 bzw. 233 und 235 pro Spalte 13 und 15 ist dabei in Fig. 8 veranschaulicht. Hierbei wird während eines ersten Zeitintervalls T1 das Referenzspannungssignal V1 und das Bildspannungssignal V2 des ersten Pixels 11A gebildet, welches in Spalte 13 angeordnet und der Spaltenleitung 19 zugeordnet ist. Dazu kann das Pixel 11A nach dem Rücksetzen des Ausleseknotens 41 durch Schließen eines Schalters 149F mit dem ersten Speicher 227 der ersten Speichereinheit 223 verbunden werden und das gebildete Referenzspannungssignal V1 kann in dem Speicher 227 gehalten werden (Schritte R, K und H1). Daraufhin kann das Pixel 11A durch Schließen eines Schalters 149B über die Spaltenleitung 19 mit dem zweiten Speicher 229 der ersten Speichereinheit 223 verbunden und das Detektorelement 15 ausgelesen werden, um ein Bildspannungssignal V2 zu bilden und in dem zweiten Speicher 229 der ersten Speichereinheit 223 zu halten (Schritte A und H2).

Gleichzeitig bzw. ebenfalls während des ersten Zeitintervalls T1 können das Referenzspannungssignal V1 und das Bildspannungssignal V2 des zweiten Pixels 11B gewandelt werden, welche in einem nicht gezeigten vorhergehenden Zeitintervall in die Speicher 227 und 229 der zweiten Speichereinheit 225 eingelesen wurden. Dazu kann der erste Speicher 227 der zweiten Speichereinheit 225 durch Schließen eines Schalters 1490 mit dem Signaleingang 213 des ersten Analog-Digital-Wandlers 209 und gleichzeitig der zweite Speicher 229 der zweiten Speichereinheit 225 durch Schließen eines Schalters 149J mit dem Signaleingang 213 des zweiten Analog-Digital-Wandlers 211 verbunden werden (Schritt V), woraufhin das Bildspannungssignal V2 und das Referenzspannungssignal V1 des zweiten Pixels 11B gleichzeitig gewandelt werden (Schritt W) und der Pixelbildwert E berechnet wird (Schritt B).

In dem ersten Zeitintervall T1 werden somit, ähnlich wie bei dem Ausführungsbeispiel der Fig. 5A, die analogen Signale V1 und V2 des ersten Pixels 11A der Spalte 13 gebildet, während in dem gleichen Zeitintervall T1 die analogen Signale des in derselben Spalte 13 angeordneten zweiten Pixels 11B gewandelt werden. Zusätzlich dazu wird das erste Zeitintervall T1 hier jedoch auch dazu genutzt, parallel zu dem Bilden und Einlesen des Referenzspannungssignals V1 und des Bildspannungssignals V2 des ersten Pixels 11A in die erste Speichereinheit 223 das Referenzspannungssignal V1 und das Bildspannungssignal V2 des vierten Pixels 11 D zu bilden und in die dritte Speichereinheit 233 einzulesen. Dazu kann die Spaltenleitung 17 nacheinander durch Schließen von Schaltern 149G bzw. 149C mit dem ersten Speicher 227 der dritten Speichereinheit 233 bzw. dem zweiten Speicher 229 der dritten Speichereinheit 233 verbunden und es können die Schritte R, K, H1, A und H2 für das vierte Pixel 11D ausgeführt werden.

Darüber hinaus werden in dem ersten Zeitintervall T1, nachdem der Digitalisierungsprozess für das zweite Pixel 11B abgeschlossen ist, auch das Referenzspannungssignal V1 und das Bildspannungssignal V2 des fünften Pixels 11E aus der Spalte 15 gewandelt. Diese analogen Signale V1 und V2 des fünften Pixels 11E können dazu in dem bereits erwähnten vorhergehenden Zeitintervall in den Speichern 227 und 229 der vierten Speichereinheit 235 durch Verbinden des fünften Pixels 11E mit der Spaltenleitung 17 und Schließen von jeweiligen Schaltern 149H und 149D eingelesen worden sein (Schritte R, K, H1, A, H2). Durch gleichzeitiges Verbinden dieser Speicher 227 und 229 der vierten Speichereinheit 235 mit den Analog-Digital-Wandlern 209 und 211, wozu Schalter 149P und 149M mittels der Steuereinrichtung 153 geschlossen werden können, können auch die dem fünften Pixel 11E zugeordneten digitalen Werte, der Bildsignalwert W2 und der Referenzsignalwert W1, gebildet und der Pixelbildwert E des fünften Pixels 11E in dem ersten Zeitintervall T1 ermittelt werden (Schritte V, W, B).

Das erste Zeitintervall T1 wird somit dazu genutzt, die analogen Signale zweier Pixel 11A und 11D, die in zwei verschiedenen Spalten 13 und 15 angeordnet sind, einzulesen und während desselben Zeitintervalls T1 zuvor eingelesene analoge Signale V1 und V2 von zwei Pixeln 11B und 11E, die ebenfalls in den zwei verschiedenen Spalten 13 und 15 angeordnet sind, nacheinander zu wandeln. Trotz des Zuordnens der Wandlereinheit 207 mit einem einzigen ersten Analog-Digital-Wandler 209 und einem einzigen zweiten Analog-Digital-Wandler 211 zu Pixeln 11 zweier Spalten 13 und 15 können folglich analoge Signale V1 und V2 eines jeweiligen Pixels 11 aus beiden Spalten 13 und 15 während des ersten Zeitintervalls T1 gewandelt werden, so dass das Auslesen des Bildsensors 1 beschleunigt erfolgen kann und beispielsweise analoge Signale V1 und V2 einer vollständigen Zeile 12 von Pixeln 11 während des ersten Zeitintervalls T1 digitalisiert werden können.

Ermöglicht wird dieses beschleunigte Auslesen dadurch, dass die Digitalisierungsprozesse gegenüber dem Auslesen der analogen Signale V1 und V2, insbesondere der Bildspannungssignale V2, in einer geringeren Zeit durchgeführt werden können. Insbesondere das Bilden der Bildspannungssignale V2 kann dabei die zum Auslesen des Bildsensors 1 benötigte Zeit bestimmen, da dazu die an dem Detektorelement 11 während einer Belichtung erzeugte elektrische Ladung vollständig abfließen und in eine Spannung an dem jeweiligen Speicher 229 übertragen werden muss. Somit kann die Zeit zum Einlesen analoger Signale V1 und V2 dazu genutzt werden, währenddessen nacheinander zuvor eingelesene und gespeicherte analoge Signale V1 und V2 mehrerer weiterer Pixel 11 zu wandeln.

Dementsprechend können in einem auf das erste Zeitintervall T1 folgenden zweiten Zeitintervall T2 die in dem ersten Zeitintervall T1 eingelesenen analogen Signale des ersten Pixels 11A und des vierten Pixels 11D nacheinander gewandelt und die Pixelbildwerte E des ersten Pixels 11A und des vierten Pixels 11D durch Subtrahieren des jeweiligen Referenzsignalwerts W1 von dem jeweiligen Bildsignalwert W2 ermittelt werden. Zudem können während des zweiten Zeitintervall T2 ein drittes Pixel 11C und ein sechstes Pixel 11F der Spalten 13 bzw. 15 ausgelesen und die jeweiligen Referenzspannungssignale V1 und Bildspannungssignale V2 in die zweite Speichereinheit 225 bzw. die vierte Speichereinheit 235 eingelesen werden. Das erste Zeitintervall T1 und das zweite Zeitintervall T2 können zyklisch wiederholt werden, um den Bildsensor 1 auf diese Weise zeilenweise auszulesen.

Grundsätzlich ist es auch möglich, einer Spalte 13 bzw. 15 und/oder einer Spaltenleitung 17 bzw. 19 mehrere Paare 231 von Speichereinheiten 223 und 225 bzw. 233 und 235 zuzuordnen. Beispielsweise können in einem Zeitintervall T1 bzw. T2 zwei analoge Signale V1 und V2 von Pixeln 11 einer Spalte 13 oder 15 gebildet und zuvor gebildete analoge Signale V1 und V2 von Pixeln 11 derselben Spalte 13 oder 15 gewandelt werden. Ferner kann es bei einigen Ausführungsformen auch vorgesehen sein, eine Wandlereinheit 207 mehr als zwei Paaren 231 von Speichereinheiten 223 und 225 bzw. 233 und 235 zuzuordnen, beispielsweise drei Paaren 231 oder vier Paaren 231, und es können beispielsweise während eines Zeitintervalls T1 oder T2 analoge Signale V1 und V2 von drei Pixeln 11 oder von vier Pixeln 11 in jeweilige Speichereinheiten eingelesen und die zuvor eingelesenen analogen Signale V1 und V2 von weiteren drei Pixeln 11 oder vier Pixeln 11 gewandelt werden. Gegebenenfalls können die Zeitintervalle T1 und T2 auch gegenüber der zum Auslesen und Speichern von Referenzspannungssignalen V1 und Bildspannungssignalen V2 benötigten Zeit geringfügig verlängert werden, um die gewünschte Anzahl von Digitalisierungsprozessen nacheinander während des Zeitintervalls T1 oder T2 durchführen zu können.

Der hierin offenbarte Bildwandler 201 ermöglicht es somit, einen Bildsensor 1 auf schnelle und effiziente Weise auszulesen und dabei durch das Digitalisieren der analogen Signale der Pixel 11 bedingte Fehler möglichst vollständig zu kompensieren. Dadurch können der tatsächlich an den jeweiligen Detektorelementen 15 der Pixel 11 erzeugten Ladung exakt entsprechende digitale Pixelbildwerte E für sämtliche Pixel 11 gewonnen werden, um eine präzise Digitalisierung eines mittels einer den Bildsensor 1 bzw. den Bildwandler 201 umfassenden Kamera erzeugten Bildes zu ermöglichen.

### Bezugszeichenliste

- 1: Bildsensor
- 3: Zeilenadressierlogik
- 4: Spaltenverstärker
- 6: Zeilenauswahlleitung
- 7: Trennlinie
- 11, 11A, 11B, ..., 11F: Pixel
- 12: Zeile
- 13: erste Spalte
- 14: zweite Spalte
- 15: lichtempfindliches Detektorelement
- 17: erste Spaltenleitung
- 19: zweite Spaltenleitung
- 31: Stromquelle
- 33: Trennschalter
- 39: Transfer-Gate
- 41: Ausleseknoten
- 43: Wandler-Transistor
- 44: Signalausgang des Wandler-Transistors
- 45: Rücksetz-Schalter
- 47: Auswahl-Schalter
- 51: Versorgungsspannung
- 52: obere Spaltenleitung
- 53: untere Spaltenleitung
- 55: oberer Block
- 57: unterer Block
- 113: Spaltenausleseschaltung
- 115: Vorladeschaltung
- 127: Referenzwert-Kondensator
- 131: Verstärker
- 133: Signalwert-Kondensator
- 135: positiver Eingang
- 137: negativer Eingang
- 149A, 149B, ..., 149P: Schalter
- 153: Steuereinrichtung

- 201: Bildwandler
- 205: Rücksetzeinrichtung
- 207: Wandlereinheit
- 209: erster Analog-Digital-Wandler
- 211: zweiter Analog-Digital-Wandler
- 213: Signaleingang
- 215: Komparator
- 216: erster Eingang des Komparators
- 217: Rampengenerator
- 218: zweiter Eingang des Komparators
- 219: erster Taktzähler
- 220: zweiter Taktzähler
- 221: Recheneinheit
- 222: Taktgenerator
- 223: erste Speichereinheit
- 225: zweite Speichereinheit
- 227: erster Speicher
- 229: zweiter Speicher
- 231: Paar von Speichereinheiten
- 233: dritte Speichereinheit
- 235: vierte Speichereinheit

- A: Auslesen
- B: Berechnen
- E: Pixelbildwert
- H1, H2: Halten
- K: Koppeln
- R: Rücksetzen
- S1, S2, ..., S5: Steuerleitung
- T1: erstes Zeitintervall
- T2: zweites Zeitintervall
- V: Verbinden
- V1: Referenzspannungssignal
- V2: Bildspannungssignal
- W: Wandeln
- W1: Referenzsignalwert
- W2: Bildsignalwert

## Patentansprüche

1. Bildwandler (201) mit einem Bildsensor (1), insbesondere CMOS-Bildsensor (1), für elektronische Kameras, welcher eine Vielzahl von in Zeilen (12) und Spalten (13, 14) angeordneten Pixeln (11) aufweist, wobei mehreren Pixeln (11) einer Spalte (13, 14) wenigstens eine gemeinsame Spaltenleitung (17, 19) zugeordnet ist und wobei jedes Pixel (11) ein lichtempfindliches Detektorelement (15), welches dazu ausgebildet ist, aus während einer Belichtung auftreffendem Licht elektrische Ladung zu erzeugen, und eine Rücksetzeinrichtung (205) umfasst, welche dazu ausgebildet ist, in dem Pixel (11) vorhandene Ladung auf einen Referenzwert zurückzusetzen,
wobei der Bildwandler (201) eine Steuereinrichtung (153) aufweist, welche dazu ausgebildet ist, ein jeweiliges Pixel (11) mit der zugeordneten Spaltenleitung (17, 19) zu koppeln, um an der Spaltenleitung (17, 19) nacheinander ein dem Referenzwert entsprechendes Referenzspannungssignal (V1) und ein der erzeugten elektrischen Ladung entsprechendes Bildspannungssignal (V2) auszugeben,
wobei der Bildwandler (201) wenigstens eine Wandlereinheit (207) aufweist, die einen ersten Analog-Digital-Wandler (209) und einen zweiten Analog-Digital-Wandler (211) aufweist, wobei die Steuereinrichtung (153) dazu ausgebildet ist, das Referenzspannungssignal (V1) des jeweiligen Pixels (11) zum Wandeln in einen digitalen Referenzsignalwert (W1) an einen Signaleingang (213) des ersten Analog-Digital-Wandlers (209) und gleichzeitig das Bildspannungssignal (V2) des jeweiligen Pixels (11) zum Wandeln in einen digitalen Bildsignalwert (W2) an einen Signaleingang (213) des zweiten Analog-Digital-Wandlers (211) anzulegen,
**dadurch gekennzeichnet, dass**
der Bildsensor (1) wenigstens eine erste und eine zweite Speichereinheit (223, 225) aufweist, wobei jede der ersten und zweiten Speichereinheiten (223, 225) einen ersten Speicher (227) zum Halten des Referenzspannungssignals (V1) und einen zweiten Speicher (229) zum Halten des Bildspannungssignals (V2) umfasst,
wobei die Steuereinrichtung (153) dazu ausgebildet ist, wahlweise den Signaleingang (213) des ersten Analog-Digital-Wandlers (209) mit dem ersten Speicher (227) der ersten Speichereinheit (223) und gleichzeitig den Signaleingang (213) des zweiten Analog-Digital-Wandlers (211) mit dem zweiten Speicher (229) der ersten Speichereinheit (223) zu verbinden, oder den Signaleingang (213) des ersten Analog-Digital-Wandlers (209) mit dem ersten Speicher (227) der zweiten Speichereinheit (225) und gleichzeitig den Signaleingang (213) des zweiten Analog-Digital-Wandlers (211) mit dem zweiten Speicher (229) der zweiten Speichereinheit (225) zu verbinden,
wobei die erste und die zweite Speichereinheit (223, 225) zwei verschiedenen Spalten (13, 14) von Pixeln (11) zugeordnet sind.

2. Bildwandler (201) mit einem Bildsensor (1), insbesondere CMOS-Bildsensor (1), für elektronische Kameras, welcher eine Vielzahl von in Zeilen (12) und Spalten (13, 14) angeordneten Pixeln (11) aufweist, wobei mehreren Pixeln (11) einer Spalte (13, 14) wenigstens eine gemeinsame Spaltenleitung (17, 19) zugeordnet ist und wobei jedes Pixel (11) ein lichtempfindliches Detektorelement (15), welches dazu ausgebildet ist, aus während einer Belichtung auftreffendem Licht elektrische Ladung zu erzeugen, und eine Rücksetzeinrichtung (205) umfasst, welche dazu ausgebildet ist, in dem Pixel (11) vorhandene Ladung auf einen Referenzwert zurückzusetzen,
wobei der Bildwandler (201) eine Steuereinrichtung (153) aufweist, welche dazu ausgebildet ist, ein jeweiliges Pixel (11) mit der zugeordneten Spaltenleitung (17, 19) zu koppeln, um an der Spaltenleitung (17, 19) nacheinander ein dem Referenzwert entsprechendes Referenzspannungssignal (V1) und ein der erzeugten elektrischen Ladung entsprechendes Bildspannungssignal (V2) auszugeben,
wobei der Bildwandler (201) wenigstens eine Wandlereinheit (207) aufweist, die einen ersten Analog-Digital-Wandler (209) und einen zweiten Analog-Digital-Wandler (211) aufweist, wobei die Steuereinrichtung (153) dazu ausgebildet ist, das Referenzspannungssignal (V1) des jeweiligen Pixels (11) zum Wandeln in einen digitalen Referenzsignalwert (W1) an einen Signaleingang (213) des ersten Analog-Digital-Wandlers (209) und gleichzeitig das Bildspannungssignal (V2) des jeweiligen Pixels (11) zum Wandeln in einen digitalen Bildsignalwert (W2) an einen Signaleingang (213) des zweiten Analog-Digital-Wandlers (211) anzulegen,
**dadurch gekennzeichnet, dass**
der Bildsensor (1) wenigstens eine erste und eine zweite Speichereinheit (223, 225) aufweist, wobei jede der ersten und zweiten Speichereinheiten (223, 225) einen ersten Speicher (227) zum Halten des Referenzspannungssignals (V1) und einen zweiten Speicher (229) zum Halten des Bildspannungssignals (V2) umfasst,
wobei die Steuereinrichtung (153) dazu ausgebildet ist, wahlweise den Signaleingang (213) des ersten Analog-Digital-Wandlers (209) mit dem ersten Speicher (227) der ersten Speichereinheit (223) und gleichzeitig den Signaleingang (213) des zweiten Analog-Digital-Wandlers (211) mit dem zweiten Speicher (229) der ersten Speichereinheit (223) zu verbinden, oder den Signaleingang (213) des ersten Analog-Digital-Wandlers (209) mit dem ersten Speicher (227) der zweiten Speichereinheit (225) und gleichzeitig den Signaleingang (213) des zweiten Analog-Digital-Wandlers (211) mit dem zweiten Speicher (229) der zweiten Speichereinheit (225) zu verbinden,
wobei die erste und die zweite Speichereinheit (223, 225) derselben Spalte (13, 15) von Pixeln (11) zugeordnet sind, und
wobei die erste Speichereinheit und die zweite Speichereinheit verschiedenen Spaltenleitungen zugeordnet sind.

3. Bildwandler (201) nach Anspruch 1 oder 2,
wobei die Steuereinrichtung (153) dazu ausgebildet ist,
- während eines ersten Zeitintervalls (T1) das Referenzspannungssignal (V1) und das Bildspannungssignal (V2) eines ersten Pixels (11A) in die erste Speichereinheit (223) einzulesen und das Referenzspannungssignal (V1) und das Bildspannungssignal (V2) eines zweiten Pixels (11B) aus der zweiten Speichereinheit (225) an die Signaleingänge (213) des ersten und des zweiten Analog-Digital-Wandlers (209, 211) anzulegen und in dem ersten und dem zweiten Analog-Digital-Wandler (209, 211) gleichzeitig in den Referenzsignalwert (W1) und den Bildsignalwert (W2) zu wandeln; und
- während eines zweiten Zeitintervalls (T2) das Referenzspannungssignal (V1) und das Bildspannungssignal (V2) eines dritten Pixels (11C) in die zweite Speichereinheit (225) einzulesen und das Referenzspannungssignal (V1) und das Bildspannungssignal (V2) des ersten Pixels (11A) aus der ersten Speichereinheit (223) an die Signaleingänge (213) des ersten und des zweiten Analog-Digital-Wandler (209, 211) anzulegen und in dem ersten und dem zweiten Analog-Digital-Wandler (209, 211) gleichzeitig in den Referenzsignalwert (W1) und den Bildsignalwert (W2) zu wandeln.

4. Bildwandler (201) nach Anspruch 1 und 3,
wobei das erste Pixel (11A) und das zweite Pixel (11B) verschiedenen Spalten (13, 14) von Pixeln (11) angehören.

5. Bildwandler (201) nach Anspruch 2 und 3,
wobei das erste Pixel (11A), das zweite Pixel (11B) und das dritte Pixel (11C) derselben Spalte (13) von Pixeln (11) angehören und wobei das erste Pixel (11A) und das zweite Pixel (11B) verschiedenen Spaltenleitungen (17, 19) zugeordnet sind.

6. Bildwandler (201) nach einem der Ansprüche 3 bis 5,
wobei die erste Speichereinheit (223) und die zweite Speichereinheit (225) zwei verschiedenen Spaltenleitungen (17, 19) zugeordnet sind, wobei die Steuereinrichtung (153) dazu ausgebildet ist,
- während des ersten Zeitintervalls (T1) die erste Speichereinheit (223) mit einer ersten der zwei verschiedenen Spaltenleitungen (17, 19) zu koppeln und die zweite Speichereinheit (225) von einer zweiten der zwei verschiedenen Spaltenleitungen (17, 19) zu entkoppeln; und
- während des zweiten Zeitintervalls (T2) die zweite Speichereinheit (225) mit der zweiten der zwei verschiedenen Spaltenleitungen (17, 19) zu koppeln und die erste Speichereinheit (223) von der ersten der zwei verschiedenen Spaltenleitungen (17, 19) zu entkoppeln.

7. Bildwandler (201) nach einem der Ansprüche 3 bis 6,
wobei die Steuereinrichtung (153) dazu ausgebildet ist,
- während des ersten Zeitintervalls (T1) die erste Speichereinheit (223) von dem ersten und dem zweiten Analog-Digital-Wandler (209, 211) zu entkoppeln und die zweite Speichereinheit (225) mit dem ersten und dem zweiten Analog-Digital-Wandler (209, 211) zu koppeln; und
- während des zweiten Zeitintervalls (T2) die erste Speichereinheit (223) mit dem ersten und dem zweiten Analog-Digital-Wandler (209, 211) zu koppeln und die zweite Speichereinheit (225) von dem ersten und dem zweiten Analog-Digital-Wandler (209, 211) zu entkoppeln.

8. Bildwandler (201) nach einem der vorhergehenden Ansprüche,
wobei die Wandlereinheit (207) dazu ausgebildet ist, das Referenzspannungssignal (V1) mittels des ersten Analog-Digital-Wandlers (209) in den digitalen Referenzsignalwert (W1) zu wandeln und gleichzeitig das Bildspannungssignal (V2) mittels des zweiten Analog-Digital-Wandlers (211) in den digitalen Bildsignalwert (W2) zu wandeln.

9. Bildwandler (201) nach einem der vorhergehenden Ansprüche,
wobei die Wandlereinheit (207) einen Rampengenerator (217) umfasst und dazu ausgebildet ist, eine gemeinsame Spannungsrampe für den ersten Analog-Digital-Wandler (209) und für den zweiten Analog-Digital-Wandler (211) zum gleichzeitigen Wandeln des Referenzspannungssignals (V1) und des Bildspannungssignals (V2) zu generieren;
und/oder
wobei der erste Analog-Digital-Wandler (209) einen ersten Taktzähler (219) und der zweite Analog-Digital-Wandler (211) einen zweiten Taktzähler (220) aufweist, wobei die Wandlereinheit (207) dazu ausgebildet ist, die Taktzähler (219, 220) des ersten Analog-Digital-Wandlers (209) und des zweiten Analog-Digital-Wandlers (211) zu synchronisieren.

10. Bildwandler (201) nach einem der vorhergehenden Ansprüche,
wobei der Bildsensor (1) für jede Spalte (13, 15) von Pixeln (11) ein oder mehrere Paare (231) von erster und zweiter Speichereinheit (223, 225) aufweist, wobei der Bildsensor (1) für ein Paar (231) oder für zwei Paare von erster und zweiter Speichereinheit (223, 225) ein jeweiliges Paar von erstem und zweitem Analog-Digital-Wandler (209, 211) aufweist.

11. Verfahren zum Auslesen eines Bildsensors (1), insbesondere eines CMOS-Bildsensors (1), für elektronische Kameras, welcher eine Vielzahl von in Zeilen (12) und Spalten (13, 14) angeordneten Pixeln (11) umfasst, wobei mehreren Pixeln (11) einer Spalte (13, 14) wenigstens eine gemeinsame Spaltenleitung (17, 19) zugeordnet ist und wobei jedes Pixel (11) ein lichtempfindliches Detektorelement (15), welches dazu ausgebildet ist, aus während einer Belichtung auftreffendem Licht elektrische Ladung zu erzeugen, und eine Rücksetzeinrichtung (205) umfasst, welche dazu ausgebildet ist, in dem Pixel (11) vorhandene Ladung auf einen Referenzwert zurückzusetzen,
mit den folgenden Schritten:
- Zurücksetzen der in einem Pixel (11) vorhandenen Ladung;
- Koppeln des Pixels (11) mit der zugeordneten Spaltenleitung (17, 19) und Ausgeben eines dem Referenzwert entsprechenden Referenzspannungssignals (V1);
- Koppeln des Pixels (11) mit der zugeordneten Spaltenleitung (17, 19) und Ausgeben eines der erzeugten Ladung entsprechenden Bildspannungssignals (V2); und
- Anlegen des Referenzspannungssignals (V1) des Pixels (11) an einen Signaleingang (213) eines ersten Analog-Digital-Wandlers (209) und gleichzeitiges Anlegen des Bildspannungssignals (V2) des Pixels (11) an einen Signaleingang (213) eines zweiten Analog-Digital-Wandlers (211),
**dadurch gekennzeichnet, dass**
während eines ersten Zeitintervalls (T1) das Referenzspannungssignal (V1) und das Bildspannungssignal (V2) eines ersten Pixels (11A) in eine erste Speichereinheit (223) eingelesen werden, wobei während des ersten Zeitintervalls (T1) das in einer zweiten Speichereinheit (225) gehaltene Referenzspannungssignal (V1) und das in der zweiten Speichereinheit (225) gehaltene Bildspannungssignal (V2) eines zweiten Pixels (11B) an die Signaleingänge (213) des ersten Analog-Digital-Wandlers (209) und des zweiten Analog-Digital-Wandlers (211) angelegt werden und in dem ersten und dem zweiten Analog-Digital-Wandler (209, 211) gleichzeitig gewandelt werden, und
wobei während eines zweiten Zeitintervalls (T2) das Referenzspannungssignal (V1) und das Bildspannungssignal (V2) des ersten Pixels (11A) an die Signaleingänge (213) des ersten Analog-Digital-Wandlers (209) und des zweiten Analog-Digital-Wandlers (211) angelegt werden und in dem ersten und dem zweiten Analog-Digital-Wandler (209, 211) gleichzeitig gewandelt werden, wobei während des zweiten Zeitintervalls (T2) das Referenzspannungssignal (V1) und das Bildspannungssignal (V2) eines dritten Pixels (11C) in die zweite Speichereinheit (225) eingelesen werden,
wobei das erste Pixel (11A), das zweite Pixel (11B) und das dritte Pixel (11C) derselben Spalte (13) zugeordnet sind und wobei das erste Pixel (11A) und das zweite Pixel (11B) verschiedenen Spaltenleitungen (17, 19) zugeordnet sind; oder
wobei das erste Pixel (11A) und das zweite Pixel (11B) verschiedenen Spalten (17, 19) zugeordnet sind.

12. Verfahren nach Anspruch 11,
mit dem Schritt:
gleichzeitiges Wandeln des Referenzspannungssignals (V1) mittels des ersten Analog-Digital-Wandlers (209) in einen digitalen Referenzsignalwert (W1) und Wandeln des Bildspannungssignals (V2) mittels des zweiten Analog-Digital-Wandlers (211) in einen digitalen Bildsignalwert (W2);
und/oder
mit dem Schritt:
Generieren einer gemeinsamen Spannungsrampe für den ersten Analog-Digital-Wandler (209) und für den zweiten Analog-Digital-Wandler (211);
und/oder
mit dem Schritt:
Bilden eines Pixelbildwerts (E) durch Subtrahieren des Referenzsignalwerts (W1) von dem Bildsignalwert (W2).

13. Verfahren nach Anspruch 11 oder 12,
wobei das Referenzspannungssignal (V1) während des Erzeugens des Bildspannungssignals (V2) in einem Speicher (227) gehalten wird;
und/oder
wobei das Referenzspannungssignal (V1) in einem ersten Speicher (227) einer Speichereinheit (223) und das Bildspannungssignal (V2) in einem zweiten Speicher (229) der Speichereinheit (223) gehalten werden, während das Bildspannungssignal (V2) und das Referenzspannungssignal (V1) an die jeweiligen Signaleingänge (213) der Analog-Digital-Wandler (209, 211) angelegt werden.

14. Verfahren nach einem der Ansprüche 11 bis 13,
wobei während des ersten Zeitintervalls (T1) das Referenzspannungssignal (V1) und das Bildspannungssignal (V2) eines vierten Pixels (11D) in eine dritte Speichereinheit (233) eingelesen werden und das in einer vierten Speichereinheit (235) gehaltene Referenzspannungssignal (V1) eines fünften Pixels (11E) und das in der vierten Speichereinheit (235) gehaltene Bildspannungssignal (V2) des fünften Pixels (11E) an die Signaleingänge (213) des ersten Analog-Digital-Wandlers (209) und des zweiten Analog-Digital-Wandlers (211) angelegt und in dem ersten und dem zweiten Analog-Digital-Wandler (209, 211) gleichzeitig gewandet werden, und
wobei während des zweiten Zeitintervalls (T2) das Referenzspannungssignal (V1) und das Bildspannungssignal (V2) des vierten Pixels (11D) an die Signaleingänge (213) des ersten Analog-Digital-Wandlers (209) und des zweiten Analog-Digital-Wandlers (211) angelegt und in dem ersten und dem zweiten Analog-Digital-Wandler (209, 211) gleichzeitig gewandelt werden und das Referenzspannungssignal (V1) und das Bildspannungssignal (V2) eines sechsten Pixels (11F) in die vierte Speichereinheit (235) eingelesen werden.

## Claims

1. An imager (201) comprising an image sensor (1), in particular a CMOS image sensor (1), for electronic cameras that has a plurality of pixels (11) arranged in rows (12) and columns (13, 14), wherein at least one common column line (17, 19) is associated with a plurality of pixels (11) of a column (13, 14), and wherein each pixel (11) comprises a light-sensitive detector element (15), which is configured to generate electric charge from light incident during an exposure, and a reset device (205) which is configured to reset charge present in the pixel (11) to a reference value,
wherein the imager (201) has a control device (153) which is configured to couple a respective pixel (11) to the associated column line (17, 19) in order to successively output a reference voltage signal (V1) that corresponds to the reference value and an image voltage signal (V2) that corresponds to the generated electric charge at the column line (17, 19),
wherein the imager (201) has at least one converter unit (207) which has a first analog-to-digital converter (209) and a second analog-to-digital converter (211), wherein the control device (153) is configured to apply the reference voltage signal (V1) of the respective pixel (11) to a signal input (213) of the first analog-to-digital converter (209) for conversion into a digital reference signal value (W1) and to simultaneously apply the image voltage signal (V2) of the respective pixel (11) to a signal input (213) of the second analog-to-digital converter (211) for conversion into a digital image signal value (W2),
**characterized in that**
the image sensor (1) has at least a first and a second memory unit (223, 225), wherein each of the first and second memory units (223, 225) comprises a first memory (227) for holding the reference voltage signal (V1) and a second memory (229) for holding the image voltage signal (V2),
wherein the control device (153) is configured to selectively connect the signal input (213) of the first analog-to-digital converter (209) to the first memory (227) of the first memory unit (223) and to simultaneously connect the signal input (213) of the second analog-to-digital converter (211) to the second memory (229) of the first memory unit (223), or to connect the signal input (213) of the first analog-to-digital converter (209) to the first memory (227) of the second memory unit (225) and to simultaneously connect the signal input (213) of the second analog-to-digital converter (211) to the second memory (229) of the second memory unit (225), wherein the first and second memory units (223, 225) are associated with two different columns (13, 14) of pixels (11).

2. An imager (201) comprising an image sensor (1), in particular a CMOS image sensor (1), for electronic cameras that has a plurality of pixels (11) arranged in rows (12) and columns (13, 14), wherein at least one common column line (17, 19) is associated with a plurality of pixels (11) of a column (13, 14), and wherein each pixel (11) comprises a light-sensitive detector element (15), which is configured to generate electric charge from light incident during an exposure, and a reset device (205) which is configured to reset charge present in the pixel (11) to a reference value,
wherein the imager (201) has a control device (153) which is configured to couple a respective pixel (11) to the associated column line (17, 19) in order to successively output a reference voltage signal (V1) that corresponds to the reference value and an image voltage signal (V2) that corresponds to the generated electric charge at the column line (17, 19),
wherein the imager (201) has at least one converter unit (207) which has a first analog-to-digital converter (209) and a second analog-to-digital converter (211), wherein the control device (153) is configured to apply the reference voltage signal (V1) of the respective pixel (11) to a signal input (213) of the first analog-to-digital converter (209) for conversion into a digital reference signal value (W1) and to simultaneously apply the image voltage signal (V2) of the respective pixel (11) to a signal input (213) of the second analog-to-digital converter (211) for conversion into a digital image signal value (W2),
**characterized in that**
the image sensor (1) has at least a first and a second memory unit (223, 225), wherein each of the first and second memory units (223, 225) comprises a first memory (227) for holding the reference voltage signal (V1) and a second memory (229) for holding the image voltage signal (V2), wherein the control device (153) is configured to selectively connect the signal input (213) of the first analog-to-digital converter (209) to the first memory (227) of the first memory unit (223) and to simultaneously connect the signal input (213) of the second analog-to-digital converter (211) to the second memory (229) of the first memory unit (223), or to connect the signal input (213) of the first analog-to-digital converter (209) to the first memory (227) of the second memory unit (225) and to simultaneously connect the signal input (213) of the second analog-to-digital converter (211) to the second memory (229) of the second memory unit (225), wherein the first and second memory units (223, 225) are associated with the same column (13, 15) of pixels (11), and
wherein the first memory unit and the second memory unit are associated with different column lines.

3. An imager (201) in accordance with claim 1 or 2,
wherein the control device (153) is configured,
- during a first time interval (T1), to read the reference voltage signal (V1) and the image voltage signal (V2) of a first pixel (11A) into the first memory unit (223), and to apply the reference voltage signal (V1) and the image voltage signal (V2) of a second pixel (11B) from the second memory unit (225) to the signal inputs (213) of the first and second analog-to-digital converter (209, 211) and to simultaneously convert the reference voltage signal (V1) and the image voltage signal (V2) of the second pixel (11B) into the reference signal value (W1) and the image signal value (W2) in the first and second analog-to-digital converter (209, 211); and,
- during a second time interval (T2), to read the reference voltage signal (V1) and the image voltage signal (V2) of a third pixel (11C) into the second memory unit (225), and to apply the reference voltage signal (V1) and the image voltage signal (V2) of the first pixel (11A) from the first memory unit (223) to the signal inputs (213) of the first and second analog-to-digital converter (209, 211) and to simultaneously convert the reference voltage signal (V1) and the image voltage signal (V2) of the first pixel (11A) into the reference signal value (W1) and the image signal value (W2) in the first and second analog-to-digital converter (209, 211).

4. An imager (201) in accordance with claim 1 and 3,
wherein the first pixel (11A) and the second pixel (11B) belong to different columns (13, 14) of pixels (11).

5. An imager (201) in accordance with claim 2 and 3,
wherein the first pixel (11A), the second pixel (11B) and the third pixel (11C) belong to the same column (13) of pixels (11), and wherein the first pixel (11A) and the second pixel (11B) are associated with different column lines (17, 19).

6. An imager (201) in accordance with any one of the claims 3 to 5,
wherein the first memory unit (223) and the second memory unit (225) are associated with two different column lines (17, 19), wherein the control device (153) is configured,
- during the first time interval (T1), to couple the first memory unit (223) to a first one of the two different column lines (17, 19) and to decouple the second memory unit (225) from a second one of the two different column lines (17, 19); and,
- during the second time interval (T2), to couple the second memory unit (225) to the second one of the two different column lines (17, 19) and to decouple the first memory unit (223) from the first one of the two different column lines (17, 19).

7. An imager (201) in accordance with any one of the claims 3 to 6,
wherein the control device (153) is configured,
- during the first time interval (T1), to decouple the first memory unit (223) from the first and second analog-to-digital converter (209, 211) and to couple the second memory unit (225) to the first and second analog-to-digital converter (209, 211); and,
- during the second time interval (T2), to couple the first memory unit (223) to the first and second analog-to-digital converter (209, 211) and to decouple the second memory unit (225) from the first and second analog-to-digital converter (209, 211).

8. An imager (201) in accordance with any one of the preceding claims, wherein the converter unit (207) is configured to convert the reference voltage signal (V1) into the digital reference signal value (W1) by means of the first analog-to-digital converter (209) and to simultaneously convert the image voltage signal (V2) into the digital image signal value (W2) by means of the second analog-to-digital converter (211).

9. An imager (201) in accordance with any one of the preceding claims, wherein the converter unit (207) comprises a ramp generator (217) and is configured to generate a common voltage ramp for the first analog-to-digital converter (209) and for the second analog-to-digital converter (211) for simultaneously converting the reference voltage signal (V1) and the image voltage signal (V2);
and/or
wherein the first analog-to-digital converter (209) has a first clock counter (219) and the second analog-to-digital converter (211) has a second clock counter (220), wherein the converter unit (207) is configured to synchronize the clock counters (219, 220) of the first analog-to-digital converter (209) and the second analog-to-digital converter (211).

10. An imager (201) in accordance with any one of the preceding claims, wherein the image sensor (1) has one or more pairs (231) of first and second memory units (223, 225) for each column (13, 15) of pixels (11), wherein the image sensor (1) has a respective pair of first and second analog-to-digital converters (209, 211) for one pair (231) or for two pairs of first and second memory units (223, 225).

11. A method of reading out an image sensor (1), in particular a CMOS image sensor (1), for electronic cameras that has a plurality of pixels (11) arranged in rows (12) and columns (13, 14), wherein at least one common column line (17, 19) is associated with a plurality of pixels (11) of a column (13, 14), and wherein each pixel (11) comprises a light-sensitive detector element (15), which is configured to generate electric charge from light incident during an exposure, and a reset device (205) which is configured to reset charge present in the pixel (11) to a reference value,
said method comprising the following steps:
- resetting the charge present in a pixel (11);
- coupling the pixel (11) to the associated column line (17, 19) and outputting a reference voltage signal (V1) corresponding to the reference value;
- coupling the pixel (11) to the associated column line (17, 19) and outputting an image voltage signal (V2) corresponding to the charge generated; and
- applying the reference voltage signal (V1) of the pixel (11) to a signal input (213) of a first analog-to-digital converter (209) and simultaneously applying the image voltage signal (V2) of the pixel (11) to a signal input (213) of a second analog-to-digital converter (211),
**characterized in that**,
during a first time interval (T1), the reference voltage signal (V1) and the image voltage signal (V2) of a first pixel (11A) are read into a first memory unit (223), wherein, during the first time interval (T1), the reference voltage signal (V1) held in a second memory unit (225) and the image voltage signal (V2) of a second pixel (11B) held in the second memory unit (225) are applied to the signal inputs (213) of the first analog-to-digital converter (209) and the second analog-to-digital converter (211) and are simultaneously converted in the first and second analog-to-digital converter (209, 211), and
wherein, during a second time interval (T2), the reference voltage signal (V1) and the image voltage signal (V2) of the first pixel (11A) are applied to the signal inputs (213) of the first analog-to-digital converter (209) and the second analog-to-digital converter (211) and are simultaneously converted in the first and second analog-to-digital converter (209, 211), wherein, during the second time interval (T2), the reference voltage signal (V1) and the image voltage signal (V2) of a third pixel (11C) are read into the second memory unit (225),
wherein the first pixel (11A), the second pixel (11B) and the third pixel (11C) are associated with the same column (13), and wherein the first pixel (11A) and the second pixel (11B) are associated with different column lines (17, 19); or
wherein the first pixel (11A) and the second pixel (11B) are associated with different columns (17, 19).

12. A method in accordance with claim 11,
comprising the step:
simultaneously converting the reference voltage signal (V1) by means of the first analog-to-digital converter (209) into a digital reference signal value (W1) and converting the image voltage signal (V2) by means of the second analog-to-digital converter (211) into a digital image signal value (W2);
and/or
comprising the step:
generating a common voltage ramp for the first analog-to-digital converter (209) and for the second analog-to-digital converter (211);
and/or
comprising the step:
forming a pixel image value (E) by subtracting the reference signal value (W1) from the image signal value (W2).

13. A method in accordance with claim 11 or 12,
wherein the reference voltage signal (V1) is held in a memory (227) during the generation of the image voltage signal (V2); and/or
wherein the reference voltage signal (V1) is held in a first memory (227) of a memory unit (223) and the image voltage signal (V2) is held in a second memory (229) of the memory unit (223) while the image voltage signal (V2) and the reference voltage signal (V1) are applied to the respective signal inputs (213) of the analog-to-digital converters (209, 211).

14. A method in accordance with any one of the claims 11 to 13,
wherein, during the first time interval (T1), the reference voltage signal (V1) and the image voltage signal (V2) of a fourth pixel (11D) are read into a third memory unit (233), and the reference voltage signal (V1) of a fifth pixel (11E) held in a fourth memory unit (235) and the image voltage signal (V2) of the fifth pixel (11E) held in the fourth memory unit (235) are applied to the signal inputs (213) of the first analog-to-digital converter (209) and the second analog-to-digital converter (211) and are simultaneously converted in the first and second analog-to-digital converter (209, 211), and
wherein, during the second time interval (T2), the reference voltage signal (V1) and the image voltage signal (V2) of the fourth pixel (11D) are applied to the signal inputs (213) of the first analog-to-digital converter (209) and the second analog-to-digital converter (211) and are simultaneously converted in the first and second analog-to-digital converter (209, 211) and the reference voltage signal (V1) and the image voltage signal (V2) of a sixth pixel (11F) are read into the fourth memory unit (235).

## Revendications

1. Convertisseur d'image (201) avec un capteur d'image (1), en particulier un capteur d'image CMOS (1), pour caméras électroniques, qui présente une pluralité de pixels (11) disposés en lignes (12) et en colonnes (13, 14), dans lequel à plusieurs pixels (11) d'une colonne (13, 14) est associée au moins une ligne conductrice de colonne commune (17, 19) et dans lequel chaque pixel (11) comprend un élément détecteur photosensible (15) qui est conçu pour générer une charge électrique à partir de la lumière incidente pendant une exposition, et un dispositif de réinitialisation (205) qui est conçu pour réinitialiser la charge présente dans le pixel (11) à une valeur de référence,
dans lequel le convertisseur d'image (201) présente un dispositif de commande (153) qui est conçu pour coupler un pixel respectif (11) à la ligne conductrice de colonne associée (17, 19) afin de délivrer successivement sur la ligne conductrice de colonne (17, 19) un signal de tension de référence (V1) correspondant à la valeur de référence et un signal de tension d'image (V2) correspondant à la charge électrique générée,
dans lequel le convertisseur d'image (201) présente au moins une unité de conversion (207) qui présente un premier convertisseur analogique-numérique (209) et un deuxième convertisseur analogique-numérique (211), le dispositif de commande (153) étant conçu pour appliquer le signal de tension de référence (V1) du pixel respectif (11) à une entrée de signal (213) du premier convertisseur analogique-numérique (209) pour le convertir en une valeur de signal de référence numérique (W1) et appliquer simultanément le signal de tension d'image (V2) du pixel respectif (11) à une entrée de signal (213) du deuxième convertisseur analogique-numérique (211) pour le convertir en une valeur de signal d'image numérique (W2),
**caractérisé en ce que**
le capteur d'image (1) présente au moins une première et une deuxième unité de mémorisation (223, 225), chacune des première et deuxième unités de mémorisation (223, 225) comprenant une première mémoire (227) pour retenir le signal de tension de référence (V1) et une deuxième mémoire (229) pour retenir le signal de tension d'image (V2),
dans lequel le dispositif de commande (153) est conçu pour, au choix, relier l'entrée de signal (213) du premier convertisseur analogique-numérique (209) à la première mémoire (227) de la première unité de mémorisation (223) et simultanément l'entrée de signal (213) du deuxième convertisseur analogique-numérique (211) à la deuxième mémoire (229) de la première unité de mémorisation (223), ou relier l'entrée de signal (213) du premier convertisseur analogique-numérique (209) à la première mémoire (227) de la deuxième unité de mémorisation (225) et simultanément l'entrée de signal (213) du deuxième convertisseur analogique-numérique (211) à la deuxième mémoire (229) de la deuxième unité de mémorisation (225),
dans lequel la première et la deuxième unité de mémorisation (223, 225) sont associées à deux colonnes différentes (13, 14) de pixels (11).

2. Convertisseur d'image (201) avec un capteur d'image (1), en particulier un capteur d'image CMOS (1), pour caméras électroniques, qui présente une pluralité de pixels (11) disposés en lignes (12) et en colonnes (13, 14), dans lequel à plusieurs pixels (11) d'une colonne (13, 14) est associée au moins une ligne conductrice de colonne commune (17, 19) et dans lequel chaque pixel (11) comprend un élément détecteur photosensible (15) qui est conçu pour générer une charge électrique à partir de la lumière incidente pendant une exposition, et un dispositif de réinitialisation (205) qui est conçu pour réinitialiser la charge présente dans le pixel (11) à une valeur de référence,
dans lequel le convertisseur d'image (201) présente un dispositif de commande (153) qui est conçu pour coupler un pixel respectif (11) à la ligne conductrice de colonne associée (17, 19) afin de délivrer successivement sur la ligne conductrice de colonne (17, 19) un signal de tension de référence (V1) correspondant à la valeur de référence et un signal de tension d'image (V2) correspondant à la charge électrique générée,
dans lequel le convertisseur d'image (201) présente au moins une unité de conversion (207) qui présente un premier convertisseur analogique-numérique (209) et un deuxième convertisseur analogique-numérique (211), le dispositif de commande (153) étant conçu pour appliquer le signal de tension de référence (V1) du pixel respectif (11) à une entrée de signal (213) du premier convertisseur analogique-numérique (209) pour le convertir en une valeur de signal de référence numérique (W1) et appliquer simultanément le signal de tension d'image (V2) du pixel respectif (11) à une entrée de signal (213) du deuxième convertisseur analogique-numérique (211) pour le convertir en une valeur de signal d'image numérique (W2),
**caractérisé en ce que**
le capteur d'image (1) présente au moins une première et une deuxième unités de mémorisation (223, 225), chacune des première et deuxième unités de mémorisation (223, 225) comprenant une première mémoire (227) pour retenir le signal de tension de référence (V1) et une deuxième mémoire (229) pour retenir le signal de tension d'image (V2),
dans lequel le dispositif de commande (153) est conçu pour, au choix, relier l'entrée de signal (213) du premier convertisseur analogique-numérique (209) à la première mémoire (227) de la première unité de mémorisation (223) et simultanément l'entrée de signal (213) du deuxième convertisseur analogique-numérique (211) à la deuxième mémoire (229) de la première unité de mémorisation (223), ou relier l'entrée de signal (213) du premier convertisseur analogique-numérique (209) à la première mémoire (227) de la deuxième unité de mémorisation (225) et relier simultanément l'entrée de signal (213) du deuxième convertisseur analogique-numérique (211) à la deuxième mémoire (229) de la deuxième unité de mémorisation (225),
dans lequel la première et la deuxième unité de mémorisation (223, 225) sont associées à la même colonne (13, 15) de pixels (11), et
dans lequel la première unité de mémorisation et la deuxième unité de mémorisation sont associées à des lignes conductrices de colonne différentes.

3. Convertisseur d'image (201) selon la revendication 1 ou 2,
dans lequel le dispositif de commande (153) est conçu pour :
- pendant un premier intervalle de temps (T1), lire le signal de tension de référence (V1) et le signal de tension d'image (V2) d'un premier pixel (11A) dans la première unité de mémorisation (223) et appliquer le signal de tension de référence (V1) et le signal de tension d'image (V2) d'un deuxième pixel (11B) de la deuxième unité de mémorisation (225) aux entrées de signal (213) du premier et du deuxième convertisseur analogique-numérique (209, 211) et les convertir simultanément en la valeur de signal de référence (W1) et la valeur de signal d'image (W2) dans le premier et le deuxième convertisseur analogique-numérique (209, 211) ; et
- pendant un deuxième intervalle de temps (T2), lire le signal de tension de référence (V1) et le signal de tension d'image (V2) d'un troisième pixel (11C) dans la deuxième unité de mémorisation (225) et appliquer le signal de tension de référence (V1) et le signal de tension d'image (V2) du premier pixel (11A) de la première unité de mémorisation (223) aux entrées de signal (213) du premier et du deuxième convertisseur analogique-numérique (209, 211) et les convertir simultanément en la valeur de signal de référence (W1) et la valeur de signal d'image (W2) dans le premier et le deuxième convertisseur analogique-numérique (209, 211).

4. Convertisseur d'image (201) selon les revendications 1 et 3,
dans lequel le premier pixel (11A) et le deuxième pixel (11B) appartiennent à différentes colonnes (13, 14) de pixels (11).

5. Convertisseur d'image (201) selon les revendications 2 et 3,
dans lequel le premier pixel (11A), le deuxième pixel (11B) et le troisième pixel (11C) appartiennent à la même colonne (13) de pixels (11) et dans lequel le premier pixel (11A) et le deuxième pixel (11B) sont associés à des lignes conductrices de colonnes différentes (17, 19).

6. Convertisseur d'image (201) selon l'une des revendications 3 à 5,
dans lequel la première unité de mémorisation (223) et la deuxième unité de mémorisation (225) sont associées à deux lignes conductrices de colonnes (17, 19) différentes, le dispositif de commande (153) étant conçu pour :
- pendant le premier intervalle de temps (T1), coupler la première unité de mémorisation (223) à une première des deux lignes conductrices de colonnes différentes (17, 19) et découpler la deuxième unité de mémorisation (225) d'une deuxième des deux lignes conductrices de colonnes différentes (17, 19) ; et
- pendant le deuxième intervalle de temps (T2), coupler la deuxième unité de mémorisation (225) à la deuxième des deux lignes conductrices de colonnes différentes (17, 19) et découpler la première unité de mémorisation (223) de la première des deux lignes conductrices de colonnes différentes (17, 19).

7. Convertisseur d'image (201) selon l'une des revendications 3 à 6,
dans lequel le dispositif de commande (153) est conçu pour :
- pendant le premier intervalle de temps (T1), découpler la première unité de mémorisation (223) du premier et du deuxième convertisseur analogique-numérique (209, 211) et coupler la deuxième unité de mémorisation (225) au premier et au deuxième convertisseur analogique-numérique (209, 211) ; et,
- pendant le deuxième intervalle de temps (T2), coupler la première unité de mémorisation (223) au premier et au deuxième convertisseur analogique-numérique (209, 211) et découpler la deuxième unité de mémorisation (225) du premier et du deuxième convertisseur analogique-numérique (209, 211).

8. Convertisseur d'image (201) selon l'une des revendications précédentes,
dans lequel l'unité de conversion (207) est conçue pour convertir le signal de tension de référence (V1) en la valeur de signal de référence numérique (W1) au moyen du premier convertisseur analogique-numérique (209) et pour convertir simultanément le signal de tension d'image (V2) en la valeur de signal d'image numérique (W2) au moyen du deuxième convertisseur analogique-numérique (211).

9. Convertisseur d'image (201) selon l'une des revendications précédentes,
dans lequel l'unité de conversion (207) comprend un générateur de rampe (217) et est conçue pour générer une rampe de tension commune pour le premier convertisseur analogique-numérique (209) et pour le deuxième convertisseur analogique-numérique (211) afin de convertir simultanément le signal de tension de référence (V1) et le signal de tension d'image (V2) ; et/ou
dans lequel le premier convertisseur analogique-numérique (209) présente un premier compteur d'horloge (219) et le deuxième convertisseur analogique-numérique (211) un deuxième compteur d'horloge (220),
dans lequel l'unité de conversion (207) est conçue pour synchroniser les compteurs d'horloge (219, 220) du premier convertisseur analogique-numérique (209) et du deuxième convertisseur analogique-numérique (211).

10. Convertisseur d'image (201) selon l'une des revendications précédentes,
dans lequel le capteur d'image (1) présente, pour chaque colonne (13, 15) de pixels (11), une ou plusieurs paires (231) de première et deuxième unités de mémorisation (223, 225), le capteur d'image (1) présentant, pour une paire (231) ou pour deux paires de première et deuxième unités de mémorisation (223, 225), une paire respective de premier et deuxième convertisseurs analogique-numérique (209, 211).

11. Procédé de lecture d'un capteur d'image (1), en particulier d'un capteur d'image CMOS (1), pour caméras électroniques, qui présente une pluralité de pixels (11) disposés en lignes (12) et en colonnes (13, 14), dans lequel à plusieurs pixels (11) d'une colonne (13, 14) est associée au moins une ligne conductrice de colonne commune (17, 19) et dans lequel chaque pixel (11) comprend un élément détecteur photosensible (15) qui est conçu pour générer une charge électrique à partir de la lumière incidente pendant une exposition, et un dispositif de réinitialisation (205) qui est conçu pour réinitialiser la charge présente dans le pixel (11) à une valeur de référence,
comprenant les étapes consistant à :
- réinitialiser la charge présente dans un pixel (11) ;
- coupler le pixel (11) à la ligne conductrice de colonne associée (17, 19) et délivrer un signal de tension de référence (V1) correspondant à la valeur de référence ;
- coupler le pixel (11) à la ligne conductrice de colonne associée (17, 19) et délivrer un signal de tension d'image (V2) correspondant à la charge générée ; et
- appliquer le signal de tension de référence (V1) du pixel (11) à une entrée de signal (213) d'un premier convertisseur analogique-numérique (209) et appliquer simultanément le signal de tension d'image (V2) du pixel (11) à une entrée de signal (213) d'un deuxième convertisseur analogique-numérique (211),
**caractérisé en ce que**,
pendant un premier intervalle de temps (T1), le signal de tension de référence (V1) et le signal de tension d'image (V2) d'un premier pixel (11A) sont lus dans une première unité de mémorisation (223), dans lequel, pendant le premier intervalle de temps (T1), le signal de tension de référence (V1) retenu dans une deuxième unité de mémorisation (225) et le signal de tension d'image (V2) d'un deuxième pixel (11B) retenu dans la deuxième unité de mémorisation (225) sont appliqués aux entrées de signal (213) du premier convertisseur analogique-numérique (209) et du deuxième convertisseur analogique-numérique (211) et sont convertis simultanément dans le premier et le deuxième convertisseur analogique-numérique (209, 211), et
dans lequel, pendant un deuxième intervalle de temps (T2), le signal de tension de référence (V1) et le signal de tension d'image (V2) du premier pixel (11A) sont appliqués aux entrées de signal (213) du premier convertisseur analogique-numérique (209) et du deuxième convertisseur analogique-numérique (211) et sont convertis simultanément dans le premier et le deuxième convertisseur analogique-numérique (209, 211), dans lequel, pendant le deuxième intervalle de temps (T2), le signal de tension de référence (V1) et le signal de tension d'image (V2) d'un troisième pixel (11C) sont lus dans la deuxième unité de mémorisation (225),
dans lequel le premier pixel (11A), le deuxième pixel (11B) et le troisième pixel (11C) sont associés à la même colonne (13), et le premier pixel (11A) et le deuxième pixel (11B) sont associés à différentes lignes conductrices de colonnes (17, 19) ; ou
dans lequel le premier pixel (11A) et le deuxième pixel (11B) sont associés à différentes colonnes (17, 19).

12. Procédé selon la revendication 11,
comprenant l'étape consistant à :
convertir simultanément le signal de tension de référence (V1) en une valeur de signal de référence numérique (W1) au moyen du premier convertisseur analogique-numérique (209) et convertir le signal de tension d'image (V2) en une valeur de signal d'image numérique (W2) au moyen du deuxième convertisseur analogique-numérique (211) ; et/ou
comprenant l'étape consistant à :
générer une rampe de tension commune pour le premier convertisseur analogique-numérique (209) et pour le deuxième convertisseur analogique-numérique (211) ; et/ou
comprenant l'étape consistant à :
former une valeur d'image de pixel (E) en soustrayant la valeur de signal de référence (W1) de la valeur de signal d'image (W2).

13. Procédé selon la revendication 11 ou 12,
dans lequel le signal de tension de référence (V1) est retenu dans une mémoire (227) pendant la génération du signal de tension d'image (V2) ; et/ou
dans lequel le signal de tension de référence (V1) est retenu dans une première mémoire (227) d'une unité de mémorisation (223) et le signal de tension d'image (V2) est retenu dans une deuxième mémoire (229) de l'unité de mémorisation (223) pendant que le signal de tension d'image (V2) et le signal de tension de référence (V1) sont appliqués aux entrées de signal respectives (213) des convertisseurs analogique-numérique (209, 211).

14. Procédé selon l'une des revendications 11 à 13,
dans lequel, pendant le premier intervalle de temps (T1), le signal de tension de référence (V1) et le signal de tension d'image (V2) d'un quatrième pixel (11D) sont lus dans une troisième unité de mémorisation (233) et le signal de tension de référence (V1) d'un cinquième pixel (11E) retenu dans une quatrième unité de mémorisation (235) et le signal de tension d'image (V2) du cinquième pixel (11E) retenu dans la quatrième unité de mémorisation (235) sont appliqués aux entrées de signal (213) du premier convertisseur analogique/numérique. numérique (209) et du deuxième convertisseur analogique-numérique (211) et sont convertis simultanément dans le premier et le deuxième convertisseur analogique-numérique (209, 211), et
dans lequel, pendant le deuxième intervalle de temps (T2), le signal de tension de référence (V1) et le signal de tension d'image (V2) du quatrième pixel (11D) sont appliqués aux entrées de signal (213) du premier convertisseur analogique-numérique (209) et du deuxième convertisseur analogique-numérique (211) et sont convertis simultanément dans le premier et le deuxième convertisseur analogique-numérique (209, 211) et le signal de tension de référence (V1) et le signal de tension d'image (V2) d'un sixième pixel (11F) sont lus dans la quatrième unité de mémorisation (235).
